# EUROPEAN PATENT APPLICATION

(11) **EP 4 351 213 A1**
(43) Date of publication of application: **10.04.2024**
(21) Application number: 22827297.7
(22) Date of filing: 25.05.2022
(51) Int. Cl.: H04W 36/00

(54) **DATA TRANSMISSION METHOD AND APPARATUS**

(30) Priority: 24.06.2021 CN 202110705433
(71) Applicant: Huawei Technologies Co., Ltd., Longgang Shenzhen, Guangdong 518129 (CN)
(72) Inventor: ZHOU, Yue, Shenzhen, Guangdong 518129 (CN); QIAO, Yunfei, Shenzhen, Guangdong 518129 (CN); LYU, Yongxia, Shenzhen, Guangdong 518129 (CN); CHEN, Ying, Shenzhen, Guangdong 518129 (CN)
(74) Representative: Pfenning, Meinig & Partner mbB
(86) International application number: PCT/CN2022/094894
(87) International publication number: WO 2022/267800

(57) **Abstract**

This application provides a data transmission method and apparatus, so that when a terminal device performs cell handover in a communication network, an unfinished HARQ process between the terminal device and a network side can be continuous, to reduce a communication latency, achieve a soft combination coding gain, and support a service that has a requirement on both reliability and a latency. The method includes: A first terminal device transmits first data with a first network device, where the first data corresponds to a first hybrid automatic repeat request HARQ process; and the first terminal device transmits second data with a second network device when the first terminal device is handed over from the first network device to the second network device, where the second data corresponds to the first HARQ process, and the second data includes at least one of data for retransmitting the first data and feedback information for the first data.

## Description

This application claims priority to Chinese Patent Application No. 202110705433.7, filed with the China National Intellectual Property Administration on June 24, 2021 and entitled "DATA TRANSMISSION METHOD AND APPARATUS", which is incorporated herein by reference in its entirety.

### TECHNICAL FIELD

This application relates to the communication field, and more specifically, to a data transmission method and apparatus.

### BACKGROUND

A 5th generation (5th generation, 5G) system and a 5G evolved network need to meet service requirements in various industries and provide wider service coverage. A current land mobile communication network has a limited coverage capability, and cannot meet people's requirement for obtaining information at any time and any place. In addition, providing ultra-wide area coverage in a current base station-based coverage mode poses a great economic and feasible challenge to scenarios such as remote areas, deserts, oceans, and air. On the other hand, compared with a conventional mobile communication system, satellite communication has a wider coverage area, supports that a transmission link and communication costs are independent of a transmission distance, and has advantages such as overcoming natural geographical obstacles like oceans, deserts, and mountains. To overcome shortcomings of a conventional communication network, satellite communication may be used as an effective supplement to the conventional network.

In a satellite communication network, because a satellite moves at a high speed, a user frequently encounters cell handover. When a user encounters inter-cell handover in a current land network, for example, a 5G or long term evolution (long term evolution, LTE) system, if there is a hybrid automatic repeat request (hybrid automatic repeat request, HARQ), for example, an acknowledgement (acknowledgement, ACK) or a negative acknowledgement (negative-acknowledgement, NACK), that has not been fed back in a timely manner, a current HARQ process (process) is directly discarded, and a HARQ buffer (buffer) is directly cleared. If this mechanism is introduced into cell handover in the satellite communication network, a problem that a HARQ process cannot be continuous when user equipment is handed over between different cells may be caused. Likewise, if channels before and after the cell handover of the user equipment are similar, there is also the foregoing problem.

### SUMMARY

This application provides a data transmission method and apparatus, so that when a terminal device performs cell handover in a communication network, an unfinished HARQ process between the terminal device and a network side can be continuous, to reduce a communication latency, achieve a soft combination coding gain, and support a service that has a requirement on both reliability and a latency.

According to a first aspect, this application provides a data transmission method. The method includes: A first terminal device transmits first data with a first network device, where the first data corresponds to a first hybrid automatic repeat request HARQ process; and the first terminal device transmits second data with a second network device when the first terminal device is handed over from the first network device to the second network device, where the second data corresponds to the first HARQ process, and the second data includes at least one of data for retransmitting the first data and feedback information for the first data.

In the foregoing manner, a transmission manner between the first terminal device and the first network device or the second network device may be uplink transmission or downlink transmission. This is not limited in this application. That is, the first data and the second data may be uplink data or downlink data.

In the foregoing manner, when the first terminal device is handed over from the first network device to the second network device, it indicates that when the first terminal device performs cell handover, although the first terminal device establishes a connection to the second network device, the cell handover is not completed.

In the foregoing manner, when the terminal device performs cell handover, the terminal device can continue to transmit data of an unfinished HARQ process with a destination network device of the cell handover. Compared with a manner of clearing HARQ buffered data in a current technical solution, the foregoing manner in this application can reduce a communication latency, achieve a soft combination coding gain, and support a service that has a requirement on both reliability and a latency.

In a possible implementation, that the first terminal device transmits second data with a second network device when the first terminal device is handed over from the first network device to the second network device includes: The first terminal device transmits the second data with the first network device in a first time period in which the first terminal device is handed over from the first network device to the second network device, where the first time period includes a time period between a moment at which the first terminal device successfully decodes a first radio resource control RRC reconfiguration message for performing the handover and a moment at which the second network device successfully decodes a first RRC reconfiguration complete message.

In the foregoing manner, the terminal device can continue to transmit data with the network device in the first time period. Compared with a current technical solution in which the terminal device and the network device stop transmitting data in the first time period, the foregoing manner in this application shortens user data transmission interruption time in a network handover process, improves a user-perceived data throughput, and shortens a user-perceived latency.

In a possible implementation, that the first terminal device transmits second data with the first network device when the first terminal device is handed over from the first network device to the second network device includes: The first terminal device transmits the second data with the first network device in a first time period in which the first terminal device is handed over from the first network device to the second network device, where the first time period includes a time period between a moment at which the first terminal device successfully sends a message 1 MSG1 and a moment at which the second network device successfully decodes a first RRC reconfiguration complete message.

A scenario of the foregoing manner may be as follows: The first terminal device performs cell handover, and a received RRC reconfiguration message includes information about a condition, where the information about the condition indicates that the first terminal device initiates a contention-free random access MSG1 when the condition is met.

In the foregoing manner, the terminal device can continue to transmit data with the network device in the first time period. Compared with a current technical solution in which the terminal device and the network device stop transmitting data in the first time period, the foregoing manner in this application shortens user data transmission interruption time in a network handover process, improves a user-perceived data throughput, and shortens a user-perceived latency.

In a possible implementation, before the first terminal device transmits the second data with the second network device, the method includes: The first terminal device replicates data of the first HARQ process in a first media access control MAC entity to a second MAC entity, where the first MAC entity corresponds to the first network device, and the second MAC entity corresponds to the second network device.

In the foregoing manner, the terminal device can retain data of an unfinished uplink HARQ process, so that the unfinished uplink HARQ process is continuous.

In a possible implementation, before the first terminal device transmits the second data with the second network device, the method includes: The first terminal device receives first indication information, where the first indication information indicates the first terminal device to transmit the second data with the second network device.

In a possible implementation, the first indication information includes one or more of the following information: an identifier of the first HARQ process, an identifier of the second network device, and a first resource, where the first resource is a resource occupied by the second data.

In the foregoing manner, the terminal device can more accurately learn of a to-be-continued HARQ process, a destination network device, and a transmission resource corresponding to the HARQ process.

In a possible implementation, the first data is uplink data, and the second data includes the data for retransmitting the first data.

In a possible implementation, the first data is downlink data, and the second data includes the feedback information for the first data.

In a possible implementation, the feedback information for the first data includes an acknowledgement ACK or a negative acknowledgement NACK.

In a possible implementation, the first network device or the second network device is a satellite.

When a network side is a satellite, the foregoing manner can enhance a latency advantage of a satellite communication system.

According to a second aspect, this application provides a data transmission method. The method includes: A first network device receives first information, where the first information indicates that a first terminal device is handed over from a second network device to the first network device; the first network device obtains second information, where the second information indicates an unfinished first hybrid automatic repeat request HARQ process between the first terminal device and the second network device; and the first network device sends third information to the first terminal device based on the second information, where the third information indicates the first terminal device to transmit second data with the first network device, the second data corresponds to the first HARQ process, the second data includes at least one of data for retransmitting first data and feedback information for the first data, the first data corresponds to the first HARQ process, and the first data is data that has been transmitted between the first terminal device and the second network device.

In the foregoing manner, a transmission manner between the first terminal device and the first network device or the second network device may be uplink transmission or downlink transmission. This is not limited in this application. That is, the first data and the second data may be uplink data or downlink data.

In the foregoing manner, when the terminal device performs cell handover, the terminal device can continue to transmit data of an unfinished HARQ process with a destination network device of the cell handover. In addition, the first network device serving as the destination network device of the cell handover can obtain the related data of the unfinished HARQ process, so that the HARQ process can be continuous. Compared with a manner of clearing HARQ buffered data in a current technical solution, the foregoing manner in this application can reduce a communication latency, achieve a soft combination coding gain, and support a service that has a requirement on both reliability and a latency.

In a possible implementation, the method includes: The first network device receives, in a first time period, fourth information sent by the second network device, where the first time period includes a time period between a moment at which the second network device sends a first radio resource control RRC reconfiguration message for the first terminal device to perform the handover and an end moment at which the first network device successfully decodes a first RRC reconfiguration complete message sent by the first terminal device, the first time period is used by the second network device to transmit third data with the first terminal device, the third data includes at least one of the data for retransmitting the first data, the feedback information for the first data, and initial data of a second HARQ process, and the fourth information is updated information of the second information and corresponds to the third data.

In the foregoing manner, the network device can continue to transmit data with the terminal device in the first time period. Compared with a current technical solution in which the terminal device and the network device stop transmitting data in the first time period, the foregoing manner in this application can shorten user data transmission interruption time in a network handover process, improve a user-perceived data throughput, and shorten a user-perceived latency.

In a possible implementation, that the first network device receives, in a first time period, fourth information sent by the second network device includes: The first network device receives, after a first latency from a start moment of the first time period, the fourth information sent by the second network device.

In a possible implementation, a value of the first latency is 2×RTT, and the RTT is a round-trip latency of data transmission between the first terminal device and the first network device or the second network device.

In the foregoing manner, the first network device can receive the fourth information after the first latency at the earliest, to avoid excessive power consumption of the first network device.

In a possible implementation, the method includes: The first network device receives, after a second latency from an end moment of receiving the fourth information, fifth information sent by the second network device, where the fifth information is updated information of the fourth information, a value of the second latency is n times (0.5×RTT), and n is a positive integer.

In the foregoing manner, the fifth information may include information in an updated part compared with the fourth information, and may further include information in an original part of the fourth information.

In the foregoing manner, the first network device can periodically receive the fifth information from the end moment of receiving the fourth information, so that it can be ensured that data of an unfinished HARQ process is updated in a timely manner.

In a possible implementation, the second information includes at least one of the following information: redundancy version data of the first HARQ process, an identifier of the first HARQ process, and a redundancy version number of the first HARQ process.

In a possible implementation, the second information includes at least one of the following information: data that is of the first HARQ process and that has been received by the second network device, and data that has been decoded by the second network device for the first HARQ process.

In a possible implementation, the third information includes one or more of the following information: the identifier of the first HARQ process, an identifier of the first network device, and a first resource, where the first resource is a resource occupied for transmitting the second data.

In the foregoing manner, the terminal device can more accurately learn of a to-be-continued HARQ process, a destination network device, and a transmission resource corresponding to the HARQ process.

In a possible implementation, when the first data is uplink data, the second data includes the data for retransmitting the first data.

In a possible implementation, when the first data is downlink data, the second data includes the feedback information for the first data.

In a possible implementation, the feedback information for the first data includes an acknowledgement ACK or a negative acknowledgement NACK.

In a possible implementation, the first terminal device or the second network device is a satellite.

When a network side is a satellite, the foregoing manner can enhance a latency advantage of a satellite communication system.

According to a third aspect, this application provides a data transmission method. The method includes: A first network device transmits first data with a first terminal device, where the first data corresponds to a first hybrid automatic repeat request HARQ process; and the first network device sends first information to a second network device when the first terminal device is handed over from the first network device to the second network device, where the first information indicates the first HARQ process.

In the foregoing manner, a transmission manner between the first terminal device and the first network device or the second network device may be uplink transmission or downlink transmission. This is not limited in this application. That is, the first data and the second data may be uplink data or downlink data.

In the foregoing manner, when the terminal device performs cell handover, the terminal device can continue to transmit data of an unfinished HARQ process with a destination network device of the cell handover. In addition, the first network device sends the related data of the unfinished HARQ process to the destination network device of the cell handover, that is, the second network device, so that the second network device can learn of the related data of the finished HARQ process, to implement continuity of the HARQ process. Compared with a manner of clearing HARQ buffered data in a current technical solution, the foregoing manner in this application can reduce a communication latency, achieve a soft combination coding gain, and support a service that has a requirement on both reliability and a latency.

In a possible implementation, the first information includes at least one of the following information: redundancy version data of the first HARQ process, an identifier of the first HARQ process, and a redundancy version number of the first HARQ process.

In a possible implementation, the first information includes at least one of the following information: data that is of the first HARQ process and that has been received by the first network device, and data that has been decoded by the first network device for the first HARQ process.

In a possible implementation, the method includes: The first network device transmits second data with the first terminal device in a first time period, where the second data includes at least one of data for retransmitting the first data, feedback information for the first data, and initial data of a second HARQ process, and the first time period includes a time period between a moment at which the first network device sends a first radio resource control RRC reconfiguration message for the first terminal device to perform the handover and a moment at which the second network device successfully decodes a first RRC reconfiguration complete message sent by the first terminal device.

In the foregoing manner, the network device can continue to transmit data with the terminal device in the first time period. Compared with a current technical solution in which the terminal device and the network device stop transmitting data in the first time period, the foregoing manner in this application can shorten user data transmission interruption time in a network handover process, improve a user-perceived data throughput, and shorten a user-perceived latency.

In a possible implementation, the method includes: The first network device sends second information to the second network device after a first latency from a start moment of the first time period, where the second information is updated information of the first information.

In the foregoing manner, time at which the first network device sends the second information is specified, so that the second network device can receive the information at the specified time, to reduce power consumption.

In a possible implementation, the first network device is a first satellite, the second network device is a second satellite, there is an inter-satellite link between the first network device and the second network device, a value of the first latency is 2×RTT1-0.5×RTT2, the RTT1 is a round-trip latency of data transmission between the first terminal device and the first network device or the second network device, and the RTT2 is a round-trip latency of data transmission between the first network device and the second network device.

In a possible implementation, the first network device is a first satellite, the second network device is a second satellite, the first network device and the second network device perform data transmission through a third network device, a value of the first latency is 2×RTT3-RTT4, the RTT3 is a round-trip latency of data transmission between the first terminal device and the first network device or the second network device, the RTT4 is a sum of a second latency and a third latency, the second latency is a latency of data transmission between the first network device and the third network device, and the third latency is a latency of data transmission between the second network device and the third network device.

In a possible implementation, the first network device and the second network device are a first satellite, a value of the first latency is 2×RTT5, and the RTT5 is a round-trip latency of data transmission between the first terminal device and the first network device.

In a possible implementation, the method includes: The first network device sends third information to the second network device after the second latency from a moment at which the second information is sent, where the third information is updated information of the second information, a value of the second latency is n times (0.5×RTT6), the RTT6 is a round-trip latency of data transmission between the first terminal device and the first network device or the second network device, and n is a positive integer.

In the foregoing manner, the third information may include information in an updated part compared with the second information, and may further include information in an original part of the second information.

In the foregoing manner, the first network device can periodically send the third information from the moment at which the second information is sent, so that it can be ensured that data of an unfinished HARQ process in the second network device is updated in a timely manner.

According to a fourth aspect, a data transmission apparatus is provided. The apparatus includes a transceiver module. The transceiver module is configured to transmit first data between a first terminal device and a first network device, and the first data corresponds to a first hybrid automatic repeat request HARQ process. The transceiver module is further configured to transmit second data between the first terminal device and a second network device when the first terminal device is handed over from the first network device to the second network device, where the second data corresponds to the first HARQ process, and the second data includes at least one of data for retransmitting the first data and feedback information for the first data.

In the foregoing manner, a transmission manner between the first terminal device and the first network device or the second network device may be uplink transmission or downlink transmission. This is not limited in this application. That is, the first data and the second data may be uplink data or downlink data.

In the foregoing manner, when the first terminal device is handed over from the first network device to the second network device, it indicates that when the first terminal device performs cell handover, although the first terminal device establishes a connection to the second network device, the cell handover is not completed.

In the foregoing manner, when the terminal device performs cell handover, the terminal device can continue to transmit data of an unfinished HARQ process with a destination network device of the cell handover. Compared with a manner of clearing HARQ buffered data in a current technical solution, the foregoing manner in this application can reduce a communication latency, achieve a soft combination coding gain, and support a service that has a requirement on both reliability and a latency.

In a possible implementation, that the transceiver module is further configured to transmit second data between the first terminal device and a second network device when the first terminal device is handed over from the first network device to the second network device includes: The transceiver module is further configured to transmit the second data between the first terminal device and the first network device in a first time period in which the first terminal device is handed over from the first network device to the second network device, where the first time period includes a time period between a moment at which the first terminal device successfully decodes a first radio resource control RRC reconfiguration message for performing the handover and a moment at which the second network device successfully decodes a first RRC reconfiguration complete message.

In the foregoing manner, the terminal device can continue to transmit data with the network device in the first time period. Compared with a current technical solution in which the terminal device and the network device stop transmitting data in the first time period, the foregoing manner in this application can shorten user data transmission interruption time in a network handover process, improve a user-perceived data throughput, and shorten a user-perceived latency.

In a possible implementation, that the transceiver module is further configured to transmit second data between the first terminal device and the first network device when the first terminal device is handed over from the first network device to the second network device includes: The transceiver module is further configured to transmit the second data between the first terminal device and the first network device in a first time period in which the first terminal device is handed over from the first network device to the second network device, where the first time period includes a time period between a moment at which the first terminal device successfully sends a message 1 MSG1 and a moment at which the second network device successfully decodes a first RRC reconfiguration complete message.

A scenario of the foregoing manner may be as follows: The first terminal device performs cell handover, and a received RRC reconfiguration message includes information about a condition, where the information about the condition indicates that the first terminal device initiates a contention-free random access MSG1 when the condition is met.

In the foregoing manner, the terminal device can continue to transmit data with the network device in the first time period. Compared with a current technical solution in which the terminal device and the network device stop transmitting data in the first time period, the foregoing manner in this application shortens user data transmission interruption time in a network handover process, improves a user-perceived data throughput, and shortens a user-perceived latency.

In a possible implementation, before the first terminal device transmits the second data with the second network device, the apparatus includes a processing module, and the processing module is used by the first terminal device to replicate data of the first HARQ process in a first media access control MAC entity to a second MAC entity, where the first MAC entity corresponds to the first network device, and the second MAC entity corresponds to the second network device.

In the foregoing manner, the terminal device can retain data of an unfinished uplink HARQ process, so that the unfinished uplink HARQ process is continuous.

In a possible implementation, before the first terminal device transmits the second data with the second network device, the transceiver module is further used by the first terminal device to receive first indication information, where the first indication information indicates the first terminal device to transmit the second data with the second network device.

In a possible implementation, the first indication information includes one or more of the following information: an identifier of the first HARQ process, an identifier of the second network device, and a first resource, where the first resource is a resource occupied by the second data.

In the foregoing manner, the terminal device can more accurately learn of a to-be-continued HARQ process, a destination network device, and a transmission resource corresponding to the HARQ process.

In a possible implementation, the first data is uplink data, and the second data includes the data for retransmitting the first data.

In a possible implementation, the first data is downlink data, and the second data includes the feedback information for the first data.

In a possible implementation, the feedback information for the first data includes an acknowledgement ACK or a negative acknowledgement NACK.

In a possible implementation, the first network device or the second network device is a satellite.

When a network side is a satellite, the foregoing manner can enhance a latency advantage of a satellite communication system.

The apparatus in the fourth aspect and the implementations of the fourth aspect may be referred to as a first communication apparatus.

According to a fifth aspect, this application provides a data transmission apparatus. The apparatus includes a transceiver module. The transceiver module is used by a first network device to receive first information, where the first information indicates that a first terminal device is handed over from a second network device to the first network device. The transceiver module is further used by the first network device to obtain second information, where the second information indicates an unfinished first hybrid automatic repeat request HARQ process between the first terminal device and the second network device. The transceiver module is further used by the first network device to send third information to the first terminal device based on the second information, where the third information indicates the first terminal device to transmit second data with the first network device, the second data corresponds to the first HARQ process, the second data includes at least one of data for retransmitting first data and feedback information for the first data, the first data corresponds to the first HARQ process, and the first data is data that has been transmitted between the first terminal device and the second network device.

In the foregoing manner, a transmission manner between the first terminal device and the first network device or the second network device may be uplink transmission or downlink transmission. This is not limited in this application. That is, the first data and the second data may be uplink data or downlink data.

In the foregoing manner, when the terminal device performs cell handover, the terminal device can continue to transmit data of an unfinished HARQ process with a destination network device of the cell handover. In addition, the first network device serving as the destination network device of the cell handover can obtain the related data of the unfinished HARQ process, so that the HARQ process can be continuous. Compared with a manner of clearing HARQ buffered data in a current technical solution, the foregoing manner in this application can reduce a communication latency, achieve a soft combination coding gain, and support a service that has a requirement on both reliability and a latency.

In a possible implementation, the transceiver module is further used by the first network device to receive, in a first time period, fourth information sent by the second network device, where the first time period includes a time period between a moment at which the second network device sends a first radio resource control RRC reconfiguration message for the first terminal device to perform the handover and an end moment at which the first network device successfully decodes a first RRC reconfiguration complete message sent by the first terminal device, the first time period is used by the second network device to transmit third data with the first terminal device, the third data includes at least one of the data for retransmitting the first data, the feedback information for the first data, and initial data of a second HARQ process, and the fourth information is updated information of the second information and corresponds to the third data.

In the foregoing manner, the network device can continue to transmit data with the terminal device in the first time period. Compared with a current technical solution in which the terminal device and the network device stop transmitting data in the first time period, the foregoing manner in this application can shorten user data transmission interruption time in a network handover process, improve a user-perceived data throughput, and shorten a user-perceived latency.

In a possible implementation, that the transceiver module is further used by the first network device to receive, in a first time period, fourth information sent by the second network device includes: The transceiver module is further used by the first network device to receive, after a first latency from a start moment of the first time period, the fourth information sent by the second network device.

In a possible implementation, a value of the first latency is 2×RTT, and the RTT is a round-trip latency of data transmission between the first terminal device and the first network device or the second network device.

In the foregoing manner, the first network device can receive the fourth information after the first latency at the earliest, to avoid excessive power consumption of the first network device.

In a possible implementation, the transceiver module is further used by the first network device to receive, after a second latency from an end moment of receiving the fourth information, fifth information sent by the second network device, where the fifth information is updated information of the fourth information, a value of the second latency is n times (0.5×RTT), and n is a positive integer.

In the foregoing manner, the fifth information may include information in an updated part compared with the fourth information, and may further include information in an original part of the fourth information.

In the foregoing manner, the first network device can periodically receive the fifth information from the end moment of receiving the fourth information, so that it can be ensured that data of an unfinished HARQ process is updated in a timely manner.

In a possible implementation, the second information includes at least one of the following information: redundancy version data of the first HARQ process, an identifier of the first HARQ process, and a redundancy version number of the first HARQ process.

In a possible implementation, the second information includes at least one of the following information: data that is of the first HARQ process and that has been received by the second network device, and data that has been decoded by the second network device for the first HARQ process.

In a possible implementation, the third information includes one or more of the following information: the identifier of the first HARQ process, an identifier of the first network device, and a first resource, where the first resource is a resource occupied for transmitting the second data.

In the foregoing manner, the terminal device can more accurately learn of a to-be-continued HARQ process, a destination network device, and a transmission resource corresponding to the HARQ process.

In a possible implementation, when the first data is uplink data, the second data includes the data for retransmitting the first data.

In a possible implementation, when the first data is downlink data, the second data includes the feedback information for the first data.

In a possible implementation, the feedback information for the first data includes an acknowledgement ACK or a negative acknowledgement NACK.

In a possible implementation, the first terminal device or the second network device is a satellite.

When a network side is a satellite, the foregoing manner can enhance a latency advantage of a satellite communication system.

The apparatus in the fifth aspect and the implementations of the fifth aspect may be referred to as a second communication apparatus.

According to a sixth aspect, this application provides a data transmission apparatus. The apparatus includes a transceiver module. The transceiver module is configured to transmit first data between a first network device and a first terminal device, and the first data corresponds to a first hybrid automatic repeat request HARQ process. The transceiver module is further used by the first network device to send first information to a second network device when the first terminal device is handed over from the first network device to the second network device, where the first information indicates the first HARQ process.

In the foregoing manner, a transmission manner between the first terminal device and the first network device or the second network device may be uplink transmission or downlink transmission. This is not limited in this application. That is, the first data and the second data may be uplink data or downlink data.

In the foregoing manner, when the terminal device performs cell handover, the terminal device can continue to transmit data of an unfinished HARQ process with a destination network device of the cell handover. In addition, the first network device sends the related data of the unfinished HARQ process to the destination network device of the cell handover, that is, the second network device, so that the second network device can learn of the related data of the finished HARQ process, to implement continuity of the HARQ process. Compared with a manner of clearing HARQ buffered data in a current technical solution, the foregoing manner in this application can reduce a communication latency, achieve a soft combination coding gain, and support a service that has a requirement on both reliability and a latency.

In a possible implementation, the first information includes at least one of the following information: redundancy version data of the first HARQ process, an identifier of the first HARQ process, and a redundancy version number of the first HARQ process.

In a possible implementation, the first information includes at least one of the following information: data that is of the first HARQ process and that has been received by the first network device, and data that has been decoded by the first network device for the first HARQ process.

In a possible implementation, the transceiver module is further used by the first network device to transmit second data with the first terminal device in a first time period, where the second data includes at least one of data for retransmitting the first data, feedback information for the first data, and initial data of a second HARQ process, and the first time period includes a time period between a moment at which the first network device sends a first radio resource control RRC reconfiguration message for the first terminal device to perform the handover and a moment at which the second network device successfully decodes a first RRC reconfiguration complete message sent by the first terminal device.

In the foregoing manner, the network device can continue to transmit data with the terminal device in the first time period. Compared with a current technical solution in which the terminal device and the network device stop transmitting data in the first time period, the foregoing manner in this application can shorten user data transmission interruption time in a network handover process, improve a user-perceived data throughput, and shorten a user-perceived latency.

In a possible implementation, the transceiver module is further used by the first network device to send second information to the second network device after a first latency from a start moment of the first time period, where the second information is updated information of the first information.

In the foregoing manner, time at which the first network device sends the second information is specified, so that the second network device can receive the information at the specified time, to reduce power consumption.

In a possible implementation, the first network device is a first satellite, the second network device is a second satellite, there is an inter-satellite link between the first network device and the second network device, a value of the first latency is 2×RTT1-0.5×RTT2, the RTT1 is a round-trip latency of data transmission between the first terminal device and the first network device or the second network device, and the RTT2 is a round-trip latency of data transmission between the first network device and the second network device.

In a possible implementation, the first network device is a first satellite, the second network device is a second satellite, the first network device and the second network device perform data transmission through a third network device, a value of the first latency is 2×RTT3-RTT4, the RTT3 is a round-trip latency of data transmission between the first terminal device and the first network device or the second network device, the RTT4 is a sum of a second latency and a third latency, the second latency is a latency of data transmission between the first network device and the third network device, and the third latency is a latency of data transmission between the second network device and the third network device.

In a possible implementation, the first network device and the second network device are a first satellite, a value of the first latency is 2×RTT5, and the RTT5 is a round-trip latency of data transmission between the first terminal device and the first network device.

In a possible implementation, the transceiver module is further used by the first network device to send third information to the second network device after the second latency from a moment at which the second information is sent, where the third information is updated information of the second information, a value of the second latency is n times (0.5×RTT6), the RTT6 is a round-trip latency of data transmission between the first terminal device and the first network device or the second network device, and n is a positive integer.

In the foregoing manner, the third information may include information in an updated part compared with the second information, and may further include information in an original part of the second information.

In the foregoing manner, the first network device can periodically send the third information from the moment at which the second information is sent, so that it can be ensured that data of an unfinished HARQ process in the second network device is updated in a timely manner.

The apparatus in the sixth aspect and the implementations of the sixth aspect may be referred to as a third communication apparatus.

According to a seventh aspect, a communication apparatus is provided. The communication apparatus may be the first communication apparatus in the foregoing method embodiments, or a chip disposed in the communication apparatus. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the communication apparatus in the foregoing method embodiments.

For example, the memory and the processor may be integrated together, or may be independent components.

According to an eighth aspect, a communication apparatus is provided. The communication apparatus may be the second communication apparatus in the foregoing method embodiments, or a chip disposed in the second communication apparatus. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the second communication apparatus in the foregoing method embodiments.

For example, the memory and the processor may be integrated together, or may be independent components.

According to a ninth aspect, a communication apparatus is provided. The communication apparatus may be the third communication apparatus in the foregoing method embodiments, or a chip disposed in the third communication apparatus. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the third communication apparatus in the foregoing method embodiments.

For example, the memory and the processor may be integrated together, or may be independent components.

According to a tenth aspect, a computer program product is provided. The computer program product includes computer program code, and when the computer program code is run, the method performed by the first communication apparatus in the foregoing aspects is performed.

In the foregoing manner, the first communication apparatus may be a terminal device.

According to an eleventh aspect, a computer program product is provided. The computer program product includes computer program code, and when the computer program code is run, the method performed by the second communication apparatus in the foregoing aspects is performed.

In the foregoing manner, the second communication apparatus may be a network device, for example, a satellite.

According to a twelfth aspect, a computer program product is provided. The computer program product includes computer program code, and when the computer program code is run, the method performed by the third communication apparatus in the foregoing aspects is performed.

In the foregoing manner, the third communication apparatus may be a network device, for example, a satellite.

According to a thirteenth aspect, this application provides a chip system. The chip system includes a processor, configured to implement a function of the first communication apparatus in the methods in the foregoing aspects. In a possible design, the chip system further includes a memory, configured to store program instructions and/or data. The chip system may include a chip, or may include a chip and another discrete component.

According to a fourteenth aspect, this application provides a chip system. The chip system includes a processor, configured to implement a function of the second communication apparatus in the methods in the foregoing aspects. In a possible design, the chip system further includes a memory, configured to store program instructions and/or data. The chip system may include a chip, or may include a chip and another discrete component.

According to a fifteenth aspect, this application provides a chip system. The chip system includes a processor, configured to implement a function of the third communication apparatus in the methods in the foregoing aspects. In a possible design, the chip system further includes a memory, configured to store program instructions and/or data. The chip system may include a chip, or may include a chip and another discrete component.

According to a sixteenth aspect, this application provides a computer-readable storage medium. The computer-readable storage medium stores a computer program. When the computer program is run, the method performed by the first communication apparatus in the foregoing aspects is implemented.

According to a seventeenth aspect, this application provides a computer-readable storage medium. The computer-readable storage medium stores a computer program. When the computer program is run, the method performed by the second communication apparatus in the foregoing aspects is implemented.

According to an eighteenth aspect, this application provides a computer-readable storage medium. The computer-readable storage medium stores a computer program. When the computer program is run, the method performed by the third communication apparatus in the foregoing aspects is implemented.

### BRIEF DESCRIPTION OF DRAWINGS

FIG. 1 is a diagram of an example application scenario applicable to an embodiment of this application;
FIG. 2 is a diagram of another example application scenario applicable to an embodiment of this application;
FIG. 3 is a diagram of another example application scenario applicable to an embodiment of this application;
FIG. 4 is a diagram of another example application scenario applicable to an embodiment of this application;
FIG. 5 is a schematic flowchart of an example according to an embodiment of this application;
FIG. 6 is a schematic flowchart of another example according to an embodiment of this application;
FIG. 7 is a schematic flowchart of another example according to an embodiment of this application;
FIG. 8 is a schematic flowchart of another example according to an embodiment of this application;
FIG. 9 is a schematic flowchart of another example according to an embodiment of this application;
FIG. 10 is a schematic flowchart of another example according to an embodiment of this application;
FIG. 11 is a schematic diagram of a structure of a possible communication apparatus according to an embodiment of this application; and
FIG. 12 is a schematic diagram of a structure of a possible communication apparatus according to an embodiment of this application.

### DESCRIPTION OF EMBODIMENTS

The following describes technical solutions of this application with reference to accompanying drawings. It is clear that the described embodiments are some but not all of embodiments of this application. Based on embodiments of this application, all other embodiments obtained by a person of ordinary skill in the art without creative efforts fall within the protection scope of this application.

The technical solutions in embodiments of this application may be applied to various communication systems, for example, a narrowband-internet of things (narrowband-internet of things, NB-IoT) system, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a satellite communication system, and a future 6th generation (6th generation, 6G) system.

A terminal device in embodiments of this application may also be referred to as user equipment (user equipment, UE), an access terminal, a terminal device unit (subscriber unit), a terminal device station, a mobile station (mobile station, MS), a remote station, a remote terminal, a mobile device, a user terminal, a terminal (terminal), a wireless communication device, a terminal device agent, or a terminal device apparatus. The terminal device may include various handheld devices having a wireless communication function, an in-vehicle device, an internet of things (internet of things, IoT) device, a wearable device, a computing device, or another processing device connected to a wireless modem. The terminal device may alternatively include a subscriber unit, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, an uncrewed aerial vehicle, or a station (station, ST) in a wireless local area network (wireless local area networks, WLAN). The terminal device may be a cellular phone, a cordless telephone, a session initiation protocol (session initiation protocol, SIP) phone, a wireless local loop (wireless local loop, WLL) station, a terminal device a next-generation communication system, for example, a 5G network, a terminal device in a future evolved PLMN network, or the like.

A network device in embodiments of this application may be a device configured to communicate with a terminal device. The network device may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario, or may be a satellite base station in a satellite communication system. Alternatively, the network device may be a relay station, an access point, an in-vehicle device, a wearable device, a network device in a 5G network, or a network device in a future evolved PLMN network, or may be a device that undertakes a base station function in device-to-device (device-to-device, D2D) communication or machine-to-machine (machine-to-machine, M2M) communication. This is not limited in embodiments of this application.

It should be noted that the technical solutions in embodiments of this application may be applicable to a central unit (central unit, CU) and distributed unit (distributed unit, DU) architecture, or may be applicable to an architecture in which a control plane (control plane, CP) and a user plane (user plane, UP) are separated. This is not limited in this application.

For ease of understanding, the following briefly describes basic concepts or technologies in embodiments of this application.

Satellite constellation: In the satellite constellation, a plurality of satellites work together to provide a larger coverage area than any satellite, for example, a geostationary earth orbit (geostationary earth orbit, GEO) satellite communication system, also referred to as a synchronous orbit satellite system; a medium earth orbit (medium earth orbit, MEO) satellite communication system; and a low earth orbit (Low Earth Orbit, LEO) satellite communication system. A satellite in a giant communication constellation represented by US SpaceX has a large-capacity inter-satellite communication capability, so that a satellite communication system has a more flexible network management capability, to reduce dependency on a land network, and enhance a system communication capability.

5G NR (or LTE) retransmission mechanism: 5G NR has a plurality of backhaul mechanisms and uses the following three-layer protocol stack.

Media access control (media access control, MAC) layer: implements a fast retransmission system in NR, which is referred to as a hybrid automatic repeat request (hybrid automatic repeat request, HARQ).

Radio link control (radio link control, RLC) layer: Although HARQ already exists at the MAC layer, some errors may still exist in a feedback system. Therefore, to handle these errors, there is a slow retransmission system at the RLC layer, and the feedback is protected by cyclic redundancy check (cyclic redundancy check, CRC). Compared with a HARQ acknowledgement mode, a frequency of RLC status report transfer is relatively low.

Packet data convergence protocol (packet data convergence protocol, PDCP) layer: ensures sequential transmission of user data, and is mainly used during handover. This is because RLC and MAC buffers are cleared during the handover.

HARQ: HARQ at the MAC layer is a technology that combines FEC (forward error correction, forward error correction) and automatic repeat request (automatic repeat request, ARQ) methods. Through the FEC, redundant information is added, so that a receiving end can correct some errors, to reduce retransmissions. For an error that cannot be corrected through the FEC, the receiving end requests, by using an ARQ mechanism, a transmitting end to retransmit data. The receiving end uses an error-detection code, usually a CRC check, to detect whether a received data packet is incorrect. If the received data packet is correct, the receiving end sends an acknowledgement (ACK) to the transmitting end. After receiving the ACK, the transmitting end sends a next data packet. If the received data packet is incorrect, the receiving end discards the data packet, and sends a negative acknowledgement (NAK) to the transmitting end. After receiving the NAK, the transmitting end retransmits same data.

The ARQ mechanism at the MAC layer uses a manner of discarding a data packet and requesting retransmission. Although these data packets cannot be correctly decoded, useful information is still included in the data packets. If the data packets are discarded, the useful information is lost. Through HARQ, a received incorrect data packet is stored in a HARQ buffer (buffer) and combined with a subsequently received retransmitted data packet to obtain a data packet that is more reliable than being decoded separately (this process may be referred to as "soft combination"). Then, the combined data packet is decoded. If decoding still fails, a process of "requesting retransmission and then performing soft combination" is repeated.

HARQ is classified into chase combining (chase combining) and incremental redundancy (incremental redundancy, IR) depending on whether retransmitted bit information is the same as that in original transmission. Bit information retransmitted in chase combining is the same as that in the original transmission. Bit information retransmitted in incremental redundancy does not need to be the same as that in the original transmission. Only the IR mechanism is used in LTE and NR.

HARQ process (process): HARQ uses the stop-and-wait protocol (stop-and-wait protocol) to transmit data. In the stop-and-wait protocol, after sending a transport block (transport block, TB), a transmitting end stops to wait for acknowledgement information. Each HARQ process needs to have an independent HARQ buffer at a receiving end, to perform soft combination on received data.

HARQ process identifier (identifier, ID): uniquely specifies a HARQ process.

New data indicator (new data indicator, NDI): Each HARQ process stores an NDI value, and the value uses 1 bit to indicate whether scheduled data is newly transmitted or retransmitted. If an NDI value of a same HARQ process changes (NDI toggled), it indicates that current transmission is initial transmission of a new TB; or if an NDI value of a same HARQ process does not change (NDI not toggled), it indicates that current transmission is retransmission of a same TB. In NR, there is no explicit HARQ ACK/NAK for a physical uplink shared channel (physical uplink shared channel, PUSCH). UE determines, by detecting, within a specific time period, whether a 5G base station (gNodeB, gNB) sends a backhaul request (indicated by an NDI in DCI), whether the PUSCH is successfully decoded.

Redundancy version (redundancy version, RV): indicates a redundancy version used for transmission, and a value of the redundancy version ranges from 0 to 3.

Radio resource control (radio resource control, RRC) connected mode (connected) in NR: An RRC connection is established between UE and a gNodeB.

RRC connected mode mobility management: UE can be changed from a source serving cell to a target cell through handover or redirection.

Xn interface: is an interface between 5G base stations, and is mainly for signaling exchange like handover.

NG interface: is an interface between a 5G base station and a 5G core network, and is mainly used to exchange non-access stratum (non-access stratum, NAS) signaling and user service data of a core network.

Access and mobility management function (access and mobility management function, AMF) network element: is mainly used for mobility management, access management, and the like, and may be configured to implement another function in a mobility management entity (mobility management entity, MME) function other than session management, for example, functions such as lawful interception or access authorization/authentication.

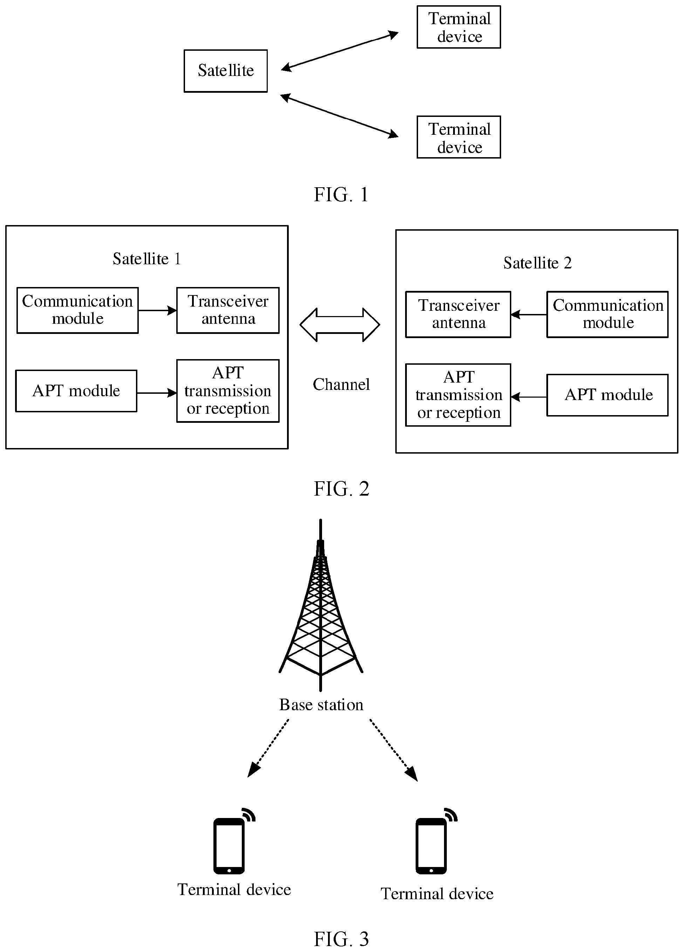

The following describes a system architecture or a scenario to which an embodiment of this application may be applied. As shown in FIG. 1 to FIG. 4, FIG. 1 is a diagram of an example application scenario applicable to an embodiment of this application.

FIG. 1 includes a satellite and a terminal-type network element. The satellite provides a communication service for a terminal device. The satellite transmits downlink data to the terminal device. The data is encoded through channel coding, and data obtained through the channel coding is modulated by using a constellation and then transmitted to the terminal device. The terminal device transmits uplink data to the satellite. The uplink data may also be encoded through channel coding, and encoded data is transmitted to the satellite after constellation modulation.

FIG. 2 is a diagram of another example application scenario applicable to an embodiment of this application. As shown in FIG. 2, inter-satellite communication includes communication between a plurality of satellites. A conventional inter-satellite link communication system may be divided into two parts: an acquisition, pointing, tracking (acquisition, pointing, tracking, APT) subsystem and a communication subsystem. The communication subsystem is responsible for inter-satellite information transmission and is a main body of the inter-satellite communication system. The APT system is responsible for acquisition, pointing, and tracking between satellites. Determining an incoming direction of an incident signal is acquisition, adjusting a transmitted wave to point to a receiving direction is pointing, and continuously adjusting pointing and acquisition in an entire communication process is tracking. To minimize impact of attenuation and interference on a channel and ensure high confidentiality and a high transmission rate, the APT needs to be adjusted in real time to continuously adapt to changes. All existing APT systems are optical systems. A disadvantage is that optical pointing is difficult, and a direction needs to be adjusted mechanically. Most of existing communication subsystems are optical communication systems, and there are some microwave band systems in which a single high-gain antenna is usually used. The existing APT system and communication subsystem are independent systems. A disadvantage is that optical communication is easily affected by vibration and the like, and a rate is unstable. A millimeter wave frequency is low, a communication capacity is low, and an antenna direction needs to be adjusted mechanically.

Embodiments of this application may be applied to a wireless communication system like 5G or satellite communication. A system architecture is shown in FIG. 3. FIG. 3 is a diagram of another example application scenario applicable to an embodiment of this application. The wireless communication system usually includes cells, each cell includes a base station (base station, BS), and the base station provides a communication service for a plurality of mobile stations (mobile station, MS). The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack.

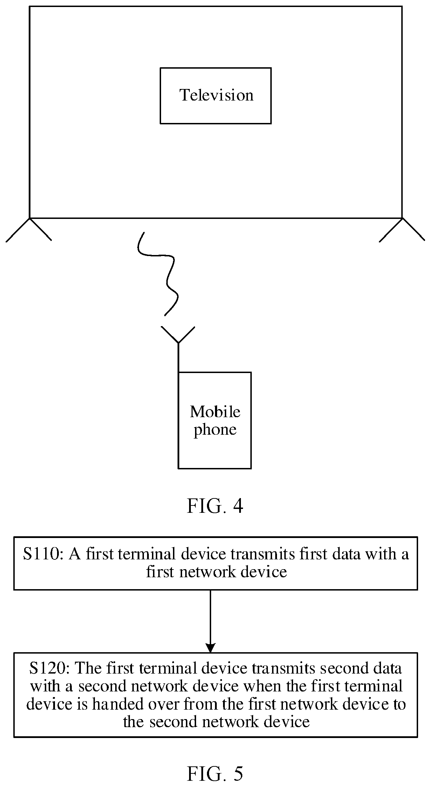

FIG. 4 is a diagram of another example application scenario applicable to an embodiment of this application. Embodiments of this application may be further applied to a wireless projection architecture shown in FIG. 4 and the like.

In the foregoing scenario, cell handover of UE in a satellite communication system is mainly caused by high-speed movement of a satellite. All orbit service satellites can stably run at a high speed on a designed orbit, and a cell range served by each satellite also stably moves at a high speed on the land according to a planned path. Therefore, a satellite network cell accessed by the UE is frequently and regularly handed over. In addition, users served by the satellite network are mainly distributed outside the city and in areas that are not covered by a land cellular network. In this type of area, there is no complex reflection of radio signals caused by various buildings in the city. Therefore, a channel between the UE and the satellite is composed of a line of sight (line of sight, LOS) path. A channel transfer function mainly depends on a path loss. In addition, when the UE triggers handover (handover), measured signal strength of a former cell and measured signal strength of a latter cell that are received by the UE meet a specific decision condition, that is, the signal strength of the former cell is less than a threshold, or the signal strength of the latter cell is greater than a threshold. When handover occurs, geometric distances between the UE and a former satellite and a latter satellite are similar. In a same constellation system, antenna system design parameters of the satellites are also basically consistent. Therefore, channels before and after the handover of the UE are similar, and the satellite communication system meets a condition for "soft combination".

If the satellite communication system directly uses the HARQ handover processing manner of NR, a buffer of a current HARQ process is directly cleared, and data is transmitted in an ARQ manner in a next cell. Because a latency in an ARQ transmission manner at a higher layer is longer than a latency in a HARQ transmission manner at a lower layer, a satellite communication latency that is relatively long originally is increased. In addition, a volume of data transmitted in the ARQ manner is greater than a volume of data transmitted in the HARQ manner. When frequent handover occurs, continuity of a HARQ process cannot be ensured, and a service that has a requirement on both reliability and a latency cannot be supported. Further, although the satellite communication system meets the condition for "soft combination", a soft combination coding gain cannot be achieved if a buffer of a current HARQ process is directly cleared.

It should be noted that embodiments of this application may also be applied to a scenario in which a channel condition of a cell before a terminal device performs inter-cell handover is similar to a channel condition of a cell after the handover. This is not limited in this application.

To resolve the foregoing problem, this application provides a method 100. FIG. 5 is a schematic flowchart of an example according to an embodiment of this application.

S110: Afirst terminal device transmits first data with a first network device.

The first data corresponds to a first hybrid automatic repeat request HARQ process.

In the foregoing manner, a transmission manner between the first terminal device and the first network device or a second network device may be uplink transmission or downlink transmission. This is not limited in this application. That is, the first data may be uplink data or downlink data.

S120: The first terminal device transmits second data with the second network device.

The second data corresponds to the first HARQ process, and the second data includes at least one of data for retransmitting the first data and feedback information for the first data.

In a possible implementation, the first terminal device is a terminal device handed over from the first network device to the second network device.

The second data may be uplink data or downlink data.

For example, a manner in which the first terminal device is handed over from the first network device to the second network device may be that the first terminal device is handed over from the first network device to the second network device based on a first parameter. The first parameter includes at least one of the following information:
signal quality, a location of the first terminal device, a location of the first network device, a handover trigger event, a handover trigger timer, handover trigger time, and a handover trigger moment.

The manner in which the first terminal device is handed over from the first network device to the second network device is not limited in this application.

In the foregoing manner, when the first terminal device is handed over from the first network device to the second network device, it indicates that when the first terminal device performs cell handover, although the first terminal device establishes a connection to the second network device, the cell handover is not completed.

In the foregoing manner, when the terminal device performs cell handover, the terminal device can continue to transmit data of an unfinished HARQ process with a destination network device of the cell handover. Compared with a manner of clearing HARQ buffered data in a current technical solution, the foregoing manner in this application can reduce a communication latency, achieve a soft combination coding gain, and support a service that has a requirement on both reliability and a latency.

In a possible implementation, the first terminal device transmits the second data with the first network device in a first time period in which the first terminal device is handed over from the first network device to the second network device, where the first time period includes a time period between a moment at which the first terminal device successfully decodes a first radio resource control RRC reconfiguration message for performing the handover and a moment at which the second network device successfully decodes a first RRC reconfiguration complete message.

In the foregoing manner, the terminal device can continue to transmit data with the network device in the first time period. Compared with a current technical solution in which the terminal device and the network device stop transmitting data in the first time period, the foregoing manner in this application can shorten user data transmission interruption time in a network handover process, improve a user-perceived data throughput, and shorten a user-perceived latency.

In a possible implementation, that the first terminal device transmits second data with the first network device when the first terminal device is handed over from the first network device to the second network device includes: The first terminal device transmits the second data with the first network device in a first time period in which the first terminal device is handed over from the first network device to the second network device, where the first time period includes a time period between a moment at which the first terminal device successfully sends a message 1 MSG1 and a moment at which the second network device successfully decodes a first RRC reconfiguration complete message.

A scenario of the foregoing manner may be as follows: The first terminal device performs cell handover, and a received RRC reconfiguration message includes information about a condition, where the information about the condition indicates that the first terminal device initiates a contention-free random access MSG1 when the condition is met.

In the foregoing manner, the terminal device can continue to transmit data with the network device in the first time period. Compared with a current technical solution in which the terminal device and the network device stop transmitting data in the first time period, the foregoing manner in this application shortens user data transmission interruption time in a network handover process, improves a user-perceived data throughput, and shortens a user-perceived latency.

In a possible implementation, the first terminal device replicates data of the first HARQ process in a first media access control MAC entity to a second MAC entity, where the first MAC entity corresponds to the first network device, and the second MAC entity corresponds to the second network device.

In the foregoing manner, the terminal device can retain data of an unfinished uplink HARQ process, so that the unfinished uplink HARQ process is continuous.

In a possible implementation, before the first terminal device transmits the second data with the second network device, the method includes: The first terminal device receives first indication information, where the first indication information indicates the first terminal device to transmit the second data with the second network device.

In a possible implementation, the first indication information includes one or more of the following information: an identifier of the first HARQ process, an identifier of the second network device, and a first resource, where the first resource is a resource occupied by the second data.

In the foregoing manner, the terminal device can more accurately learn of a to-be-continued HARQ process, a destination network device, and a transmission resource corresponding to the HARQ process.

In a possible implementation, the first data is uplink data, and the second data includes the data for retransmitting the first data.

In a possible implementation, the first data is downlink data, and the second data includes the feedback information for the first data.

In a possible implementation, the feedback information for the first data includes an acknowledgement ACK or a negative acknowledgement NACK.

In a possible implementation, the first network device or the second network device is a satellite.

When a network side is a satellite, the foregoing manner can enhance a latency advantage of a satellite communication system.

The following describes the method 100 in detail for different scenarios.

When a coverage area of each satellite is a cell, inter-cell handover of UE is actually inter-satellite handover. There is an inter-satellite link between satellites to form an Xn interface. In addition, satellites for handover belong to a same constellation and are managed by a same AMF.

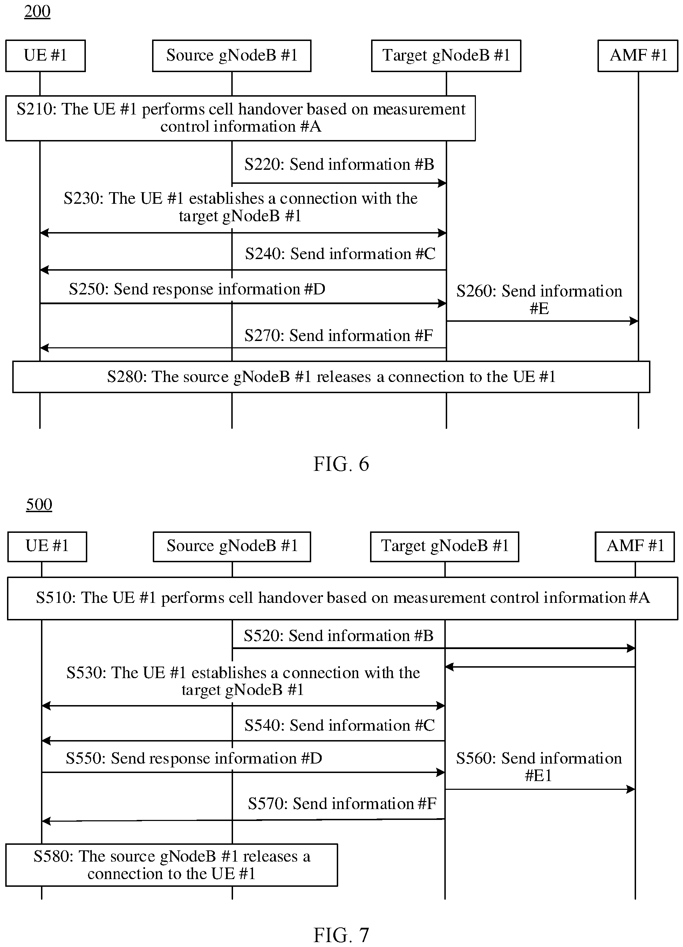

This application considers how to switch an uplink HARQ process in this scenario. For example, as shown in a method 200 in FIG. 6, FIG. 6 is a schematic flowchart of another example according to an embodiment of this application. In FIG. 6, a source gNodeB #1 (the gNodeB #1 may be understood as one gNodeB, and for other content related to "#", refer to the explanation herein) is in a coverage area of a satellite #1 (not shown in FIG. 6) (in other words, the source gNodeB #1 is in a coverage area of a source cell #1), and a target gNodeB #1 is in a coverage area of a satellite #2 (not shown in FIG. 6) (in other words, the target gNodeB #1 is in a coverage area of a target cell #1). An Xn interface is formed between the satellite #1 and the satellite #2. The satellite #1 and the satellite #2 belong to a same constellation, and are managed by a same AMF. The source gNodeB #1 is a base station of a serving cell of UE #1 before cell handover, and the target gNodeB #1 is a base station of a target serving cell of the cell handover performed by the UE#1.

In S210, the UE #1 performs cell handover based on measurement control information #A.

Specifically, there may be the following steps.

Step a: The source gNodeB #1 delivers the measurement control information #A to the UE #1 by using an RRC reconfiguration (RRC reconfiguration) message. The measurement control information #A includes a measurement object (for example, intra-frequency measurement or inter-frequency measurement), a measurement configuration (for example, an object to be measured by the UE, a cell list, a report manner, a measurement identifier, or an event parameter), a measurement gap (GAP) configuration, and the like.

Step b: The UE #1 responds to the source gNodeB #1 by using an RRC reconfiguration complete (reconfiguration complete) message.

Step c: The UE #1 performs measurement based on the received measurement control information #A. After measuring a cell and determining that a condition of a trigger event of the measurement is met, the UE #1 reports measurement report information #A1 to the source gNodeB #1. The measurement report information #A1 includes information such as signal quality of the measured cell.

Step d: After receiving the measurement report information #A1, the source gNodeB #1 determines a handover policy and a target cell (or frequency) based on the measurement report information #A1.

Step e: The source gNodeB #1 sends, through an Xn link, handover request (handover request) information to the target gNodeB #1 to which the selected target cell #1 belongs, to initiate a handover request.

Step f: After receiving the handover request information, the target gNodeB #1 performs admission control, and allocates an instance and a transmission resource to the UE #1 after admission is allowed.

Step g: The target gNodeB #1 returns a handover request acknowledgement (handover request acknowledge) message to the source gNodeB #1, to allow incoming handover. If incoming handover of some protocol data unit (protocol data unit, PDU) sessions (session) fails, the handover request acknowledgement message needs to carry a list of failed PDU sessions.

Step h: The source gNodeB #1 sends an RRC reconfiguration message to the UE #1, to require the UE #1 to perform handover to the target cell #1, where the RRC reconfiguration message may include information such as an RRC reconfiguration target cell ID (RRCReconfiguration target cell ID), a new cell radio network temporary identifier (new cell radio network temporary identifier, new C-RNTI), and a security algorithm (security algorithm).

Step i: The source gNodeB #1 sends a PDCP SN number to the target gNodeB #1 by using service node status transfer (service node status transfer, SN status transfer) signaling. Then, buffered data (buffered data) and new data of a user plane function (user plane function, UPF) are transmitted by using an uplink (uplink).

S220: The source gNodeB #1 sends information #B, and the target gNodeB #1 receives the information #B.

The information #B indicates an unfinished uplink HARQ process between the source gNodeB #1 and the UE #1, and the information #B may include one or more of the following information:
buffered data of all current unfinished uplink HARQ processes, including at least one of data received by the source gNodeB #1 and data decoded by the source gNodeB #1 that correspond to each unfinished uplink HARQ process, where for example, the "unfinished uplink HARQ process" herein means that the UE #1 sends uplink data to the source gNodeB #1, but the source gNodeB #1 has not fed back an ACK or a NACK for the uplink data, or has fed back a NACK but has not received retransmitted data from the UE #1, where an uplink HARQ process in this condition is the "unfinished uplink HARQ process"; or the source gNodeB #1 has fed back a NACK for the uplink data, and the UE #1 needs to retransmit the uplink data; and
IDs of all the current unfinished uplink HARQ processes.

The source gNodeB #1 sends the information #B, so that the target gNodeB #1 learns of statuses and information of all the current unfinished uplink HARQ processes, and has a capability of taking over the current HARQ processes.

S230: The UE #1 establishes a connection with the target gNodeB #1.

Specifically, the following steps are included.

Step a: The UE #1 initiates contention-free random access in the target cell in which the target gNodeB #1 is located, and sends a message 1 (message 1, MSG1), where the message 1 includes a random access preamble (preamble) sequence.

Step b: The target gNodeB #1 makes a random access response, and sends a message 2 (message 2, MSG2).

Step c: The UE #1 sends RRC reconfiguration complete information to the target gNodeB #1, and the UE #1 is handed over to the target cell #1 over an air interface.

Currently, in a time period (which may be referred to as a time period #A) from an end moment of step h in S210 (that is, a moment at which the UE #1 successfully decodes the RRC reconfiguration message sent by the source gNodeB #1) to an end moment of step c in S230 (that is, a moment at which the target gNodeB #1 successfully decodes the RRC reconfiguration complete information), the UE #1 no longer sends uplink data to the source gNodeB #1. This means that the UE #1 interrupts transmission of uplink retransmitted data of an unfinished uplink HARQ process, or interrupts transmission of feedback data (ACK or NACK) of an unfinished downlink HARQ process, or interrupts transmission of data of a new uplink HARQ process.

For this problem, the following solution is designed in this application.

In the time period #A, the UE #1 may continue to send uplink data #A to the source gNodeB #1, where the uplink data #A includes uplink retransmitted data of an unfinished uplink HARQ process, and/or feedback data (ACK or NACK) of an unfinished downlink HARQ process.

In a possible implementation, the uplink data #A may further include uplink data of a new HARQ process.

In the foregoing solution, because data of a HARQ process between the UE #1 and the source gNodeB #1 is updated, updated data of the HARQ process needs to be transferred between the source gNodeB #1 and the target gNodeB #1. Therefore, the following solution is designed in this application.

After sending the RRC reconfiguration message to the UE #1 in step h in S210, the source gNodeB #1 sends information #Bg to the target gNodeB #1 after duration #A, and starts to periodically send information #Bg1, information #Bg2, and the like to the target gNodeB #1, until the source gNodeB #1 receives end marker (end marker) information sent by an AMF #1. The information #Bg, the information #Bg1, the information #Bg2, and the like are updated information #B based on the uplink data #A sent by the UE #1 in the time period #A. The information #Bg, the information #Bg1, the information #Bg2, and the like may include data corresponding to an updated HARQ process, and may include data corresponding to a non-updated HARQ process.

In a possible implementation, the duration #A may be predefined.

In a possible implementation, a value of the duration #Amay be (2×RTT1-0.5×RTT2), where the RTT1 is a round-trip latency of signal transmission between the UE #1 and the source gNodeB #1 or the target gNodeB #1, and the RTT2 is a round-trip latency of signal transmission between the source gNodeB #1 and the target gNodeB #1.

It should be noted that the value of the duration #A may alternatively be greater than (2×RTT1-0.5×RTT2), for example, when a decoding error occurs on the UE #1 or the target gNodeB #1 in the time period #A.

For example, a value of the RTT1 is 540 ms.

For example, a value of the RTT2 is 13.2 ms (in the method 200, there is inter-satellite communication between the source gNodeB #1 and the target gNodeB #1).

In a possible implementation, a length of the foregoing cycle may be predefined.

In a possible implementation, the length of the foregoing cycle may be n times (0.5xRTT1), where n is an integer greater than 0.

When the UE #1 and the target gNodeB #1 repeatedly send interaction signaling in the time period #A, and the target gNodeB #1 times out in receiving the RRC reconfiguration complete information, the foregoing solution resolves a problem that the source gNodeB #1 cannot send, to the target gNodeB #1 in a timely manner, a status of an updated HARQ process between the source gNodeB #1 and the UE #1.

S240: The target gNodeB #1 sends information #C, and the UE #1 receives the information #C.

The information #C includes at least one of the following information:
information #C 1, indicating whether all current unfinished uplink HARQ processes of the UE #1 need to be retransmitted, where for example, the information #C1 may include an ID of an uplink HARQ process that needs to be retransmitted and NACK data, or an ID of an uplink HARQ process that does not need to be retransmitted and ACK data, and it should be understood that the uplink HARQ process that needs to be retransmitted or the uplink HARQ process that does not need to be retransmitted herein is included in all the unfinished uplink HARQ processes;
information #C1a, indicating a time-frequency resource occupied by uplink data corresponding to an uplink HARQ process that needs to be retransmitted by the UE #1 and indicating that a sending object is the target gNodeB #1, where for example, the information #C1a may include an ID of the uplink HARQ process that needs to be retransmitted, the corresponding time-frequency resource, and an identifier of the target gNodeB #1; and
information #C2, indicating a resource that is of the target cell #1 and that is allocated by the target gNodeB #1 to the UE #1, where the resource may be used to transmit new data or transmit HARQ data of a new HARQ process between the target gNodeB #1 and the UE #1.

After receiving the information #C, the UE #1 preferentially responds to a HARQ operation according to an indication of the information #C delivered by the target gNodeB #1. For example, for an unfinished uplink HARQ process #1, the UE #1 may retransmit uplink data of the uplink HARQ process #1 to the source gNodeB #1 on a time-frequency resource #1, or may retransmit uplink data of the uplink HARQ process #1 to the target gNodeB #1 on a time-frequency resource #2 according to an indication of the information #C1a. In this case, the UE #1 preferentially selects the latter solution, that is, retransmits the uplink data of the uplink HARQ process #1 to the target gNodeB #1 on the time-frequency resource #2.

In a possible implementation, the information #C may be included in downlink control information (downlink control information, DCI) and carried in RRC signaling.

S250: The UE #1 sends response information #D, and the target gNodeB #1 receives the response information #D.

Specifically, the UE #1 sends the response information #D based on the information #C.

For example, the response information #D includes an ID of an uplink HARQ process and corresponding ACK or NACK data.

S260: The target gNodeB #1 sends information #E, and the AMF #1 receives the information #E.

Specifically, the information #E may be a path switch request (path switch request) message. The target gNodeB #1 sends the path switch request message to the AMF #1, to notify that a serving cell of the UE #1 has changed. The path switch request message carries a target cell identifier and a list of converted PDU sessions. After receiving the message, a core network updates a downlink general packet radio service tunneling protocol (general packet radio service tunneling protocol, GPRS tunneling protocol)-U data plane, and modifies a GTP-U address on a base station side to an address of the target gNodeB #1.

S270: The target gNodeB #1 sends information #F, and the UE #1 receives the information #F.

Specifically, the target gNodeB #1 sends the information #F to the UE #1. The information #F indicates the UE #1 to retransmit the uplink data to the target gNodeB #1.

The information #F may include at least one of the following information:
an ID of an uplink HARQ process for which uplink data needs to be retransmitted, the identifier of the target gNodeB #1, and a time-frequency resource occupied for retransmitting the uplink data.

The information #F may be used to further ensure continuity of the HARQ process when the UE #1 is handed over to the target cell #1. That is, if the UE #1 fails to send uplink retransmitted data or feedback data of downlink data to the target cell #1 based on the information #C (because the UE #1 sends the response information to the target cell #1 in S250, the target cell #1 learns which HARQ processes are successfully switched and which HARQ processes are not successfully switched), an unfinished uplink HARQ process may be continued based on the information #F, to ensure continuity of the HARQ process.

S280: The source gNodeB #1 releases a connection to the UE #1.

Specifically, there may be the following steps.

Step a: The AMF #1 returns a path switch request acknowledgement (path switch request acknowledge) message to the target gNodeB #1. If the AMF #1 indicates, in the path switch request acknowledgement message, a PDU session that fails to be established by the core network, the target gNodeB #1 deletes the PDU session that fails to be established.

Step b: The target gNodeB #1 sends a UE context release (UE context release) message to the source gNodeB #1. After receiving the message, the source gNodeB #1 releases the connection to the UE #1.

In a possible implementation, after the source gNodeB #1 sends the information #B and before the source gNodeB #1 releases the connection to the UE #1, if a new uplink HARQ process is generated or a status of a HARQ process is updated, the source gNodeB #1 may perform processing in the following two manners.

### Manner 1

The new uplink HARQ process is continued, and uplink data feedback is performed for the UE #1, until the new uplink HARQ process ends.

### Manner 2

Related data of a HARQ process for which a NACK needs to be returned or an updated status of the HARQ process is sent to the target gNodeB #1. For specific content, refer to the foregoing information #B. Details are not described herein again. For a HARQ process for which an ACK needs to be returned, the source gNodeB #1 sends ACK data to the UE #1. After receiving the data, the target gNodeB #1 may send, to the UE #1, information indicating whether the data needs to be retransmitted and a time-frequency resource occupied if the data needs to be retransmitted. For specific content, refer to the information #C.

In a possible implementation, the target gNodeB #1 delivers measurement control information of the target cell #1 to the UE #1 by using an RRC reconfiguration (RRCReconfiguration) message. After receiving the new measurement control information delivered by the target gNodeB #1, the UE #1 returns an RRC reconfiguration complete (RRCReconfigurationComplete) message.

This application further considers how to switch a downlink HARQ process in the scenario of the method 200, as shown in a method 300. For descriptions of a source gNodeB #1, a target gNodeB #1, and an AMF #1, refer to the descriptions in the method 200. Details are not described herein again.

In S310, UE #1 performs cell handover based on measurement control information #A.

For a specific step, refer to the step S210. Details are not described herein again.

S320: The UE #1 establishes a connection with the target gNodeB #1.

For a specific step, refer to the step S230. Details are not described herein again.

In a possible implementation, the UE #1 replicates data of an unfinished HARQ process in a first media access control MAC entity to a second MAC entity. The first MAC entity is a MAC entity between the UE #1 and the source gNodeB #1, and the second MAC entity is a MAC entity between the UE #1 and the target gNodeB #1.

S330: The target gNodeB #1 sends information #E, and the AMF #1 receives the information #E.

For specific content, refer to the step S260. Details are not described herein again.

S340: The source gNodeB #1 releases a connection to the UE #1.

Specifically, there may be the following steps.

Step a: The AMF #1 returns a path switch request acknowledgement (path switch request acknowledge) message to the target gNodeB #1. If the AMF #1 indicates, in the path switch request acknowledgement message, a PDU session that fails to be established by the core network, the target gNodeB #1 deletes the PDU session that fails to be established.

Step b: The target gNodeB #1 sends a UE context release (UE context release) message to the source gNodeB #1. After receiving the message, the source gNodeB #1 releases the connection to the UE #1.

In a possible implementation, if the source gNodeB #1 still needs to send, to the UE #1, downlink data that is not completely sent, before releasing the connection to the UE #1, the source gNodeB #1 may continue to send the downlink data that is not completely sent, but no longer send new downlink data.

S350: The source gNodeB #1 sends information #B1 to the target gNodeB #1.

The information #B1 indicates original downlink HARQ process information of an unfinished downlink HARQ process between the source gNodeB #1 and the UE #1, and the information #B1 may include one or more of the following information:
redundancy version data corresponding to each unfinished downlink HARQ process, and NACK data that is sent by the UE #1 and that corresponds to each unfinished downlink HARQ process, where for example, the "unfinished downlink HARQ process" herein means that the source gNodeB #1 sends downlink data to the UE #1, but the UE #1 has not fed back an ACK or a NACK for the downlink data, where a downlink HARQ process in this condition is the "unfinished downlink HARQ process"; or the UE #1 feeds back a NACK for the downlink data, and the source gNodeB #1 needs to retransmit the downlink data;
IDs of all current unfinished downlink HARQ processes; and
redundancy version numbers of all the current unfinished downlink HARQ processes, including a status of a redundancy version of each unfinished downlink HARQ process, for example, a quantity of times that the redundancy version of the unfinished downlink HARQ process has been sent.

In a possible implementation, if the source gNodeB #1 receives data delivered by a UPF or there is downlink data that has not been sent in a buffer of the source gNodeB #1, the source gNodeB #1 needs to send the downlink data to the target gNodeB #1. The downlink data may be included in the information #B1.

The source gNodeB #1 sends the information #B1, so that the target gNodeB #1 learns of statuses and information of all the current unfinished downlink HARQ processes, and has a capability of taking over the current HARQ processes.

S360: The target gNodeB #1 sends information #C3, and the UE #1 receives the information #C3.

The information #C3 indicates the UE #1 to send feedback data for all the current unfinished downlink HARQ processes to the target gNodeB #1, and indicates a time-frequency resource occupied by the feedback data.

For example, the information #C3 may include at least one of the following information:
an ID of a current unfinished downlink HARQ process, a time-frequency resource occupied by feedback data corresponding to the ID of the current unfinished downlink HARQ process, and an identifier of the target gNodeB #1.

In a possible implementation, the information #C3 may alternatively be redundancy version data of the target gNodeB #1 for downlink data for which the UE #1 feeds back NACK data (that is, retransmitted downlink data), and an ID of a corresponding downlink HARQ process.

After receiving the information #C3, the UE #1 preferentially responds to a HARQ operation according to an indication of the information #C3 delivered by the target gNodeB #1. For example, feedback data of the UE #1 for the unfinished downlink HARQ process #1 may be sent to the source gNodeB #1 on a time-frequency resource #1, or may be sent to the target gNodeB #1 on a time-frequency resource #2 according to the indication of the information #C3. In this case, the UE #1 preferentially selects the latter solution, that is, sends the feedback data to the target gNodeB #1 on the time-frequency resource #2.

S370: The UE #1 sends response information #D1, and the target gNodeB #1 receives the response information #D1.

Specifically, the UE #1 makes, by using the response information #D1, a feedback to the information #C3 sent by the target gNodeB #1.

For example, the response information #D1 includes an ID of a downlink HARQ process and/or corresponding ACK or NACK data.

In the scenario of the method 200, for switching of a downlink HARQ process, this application further provides a method 400. For descriptions of a source gNodeB #1, a target gNodeB #1, and an AMF #1, refer to the descriptions in the method 200. Details are not described herein again.

S410: UE #1 performs cell handover based on measurement control information #A.

For a specific step, refer to the step S210. Details are not described herein again.

S420: The source gNodeB #1 sends information #B1 to the target gNodeB #1.

For content of the information #B1, refer to the step S350. Details are not described herein again.

S430: The UE #1 establishes a connection with the target gNodeB #1.

For a specific step, refer to the step S230. Details are not described herein again.

Currently, in a time period (which may be referred to as a time period #B) from a start moment (that is, a moment after the source gNodeB #1 sends the RRC reconfiguration message) of step h in S410 (referring to step h in S210) to an end moment (that is, a moment at which the target gNodeB #1 successfully decodes the RRC reconfiguration completion information) of step c in S430 (referring to step c in S230), the source gNodeB #1 no longer sends downlink data to the UE #1. This means that the source gNodeB #1 interrupts transmission of downlink retransmitted data of an unfinished downlink HARQ process, or interrupts transmission of feedback data (ACK or NACK) of an unfinished uplink HARQ process, or interrupts transmission of data of a new downlink HARQ process.

For this problem, the following solution is designed in this application.

In the time period #B, the source gNodeB #1 may continue to send downlink data #A to the UE #1, where the downlink data #A includes downlink retransmitted data of an unfinished downlink HARQ process, and/or feedback data (ACK or NACK) of an unfinished uplink HARQ process.

In a possible implementation, the downlink data #A may further include data of a new downlink HARQ process, for example, downlink user plane data that has been allocated by a UPF #1 to the source gNodeB #1.

In the foregoing solution, because data of a HARQ process between the UE #1 and the source gNodeB #1 is updated, updated data of the HARQ process needs to be transferred between the source gNodeB #1 and the target gNodeB #1. Therefore, the following solution is designed in this application.

After sending the RRC reconfiguration message to the UE #1 in step h in S210, the source gNodeB #1 sends information #B1g to the target gNodeB #1 after duration #A, and starts to periodically send information #B1g1, information #B1g2, and the like to the target gNodeB #1, until the source gNodeB #1 receives end marker (end marker) information sent by the AMF #1. The information #B1g, the information #B1g1, the information #B1g2, and the like are updated information #B1 based on the downlink data #A sent by the UE #1 in the time period #B. The information #B1g, the information #B1g1, the information #B1g2, and the like may include data corresponding to an updated HARQ process, and may include data corresponding to a non-updated HARQ process.

For content of the duration #A, refer to the description of the method 200. Details are not described herein again.

For a length of the foregoing cycle, refer to the description of the method 200. Details are not described herein again.

When the UE #1 and the target gNodeB #1 repeatedly send interaction signaling in the time period #B, and the target gNodeB #1 times out in receiving the RRC reconfiguration complete information, the foregoing solution resolves a problem that the source gNodeB #1 cannot send, to the target gNodeB #1 in a timely manner, a status of an updated HARQ process between the source gNodeB #1 and the UE #1.

S440: The target gNodeB #1 sends information #C3, and the UE #1 receives the information #C3.

For content of the information #C3, refer to the step S360. Details are not described herein again.

In a possible implementation, after the source gNodeB #1 sends the information #B1 to the target gNodeB #1 and before the target gNodeB #1 sends the information #C3, if the source gNodeB #1 sends new downlink data to the UE #1 or receives new feedback data from the UE #1, the source gNodeB #1 needs to synchronize the generated new status to the target gNodeB #1 again. For example, the source gNodeB #1 needs to send, to the target gNodeB #1, data of all HARQ processes corresponding to the new downlink data and IDs of the corresponding HARQ processes. For another example, the source gNodeB #1 needs to send received new feedback data of the UE #1 and an ID of a corresponding HARQ process to the target gNodeB #1, so that the target gNodeB #1 learns of latest data of an unfinished HARQ process. After receiving the new HARQ process data sent by the source gNodeB #1, the target gNodeB #1 may include control information corresponding to the new HARQ process data in the information #C3, and send the information #C3 to the UE #1. For specific content, refer to the information #C3. Details are not described herein again.

S450: The UE #1 sends response information #D1, and the target gNodeB #1 receives the response information #D1.

For the response information #D1, refer to the step S370. Details are not described herein again.

S460: The target gNodeB #1 sends information #E, and the AMF #1 receives the information #E.

Specifically, the information #E may be a path switch request (path switch request) message. The target gNodeB #1 sends the path switch request message to the AMF #1, to notify that a serving cell of the UE #1 has changed. The path switch request message carries a target cell identifier and a list of converted PDU sessions. After receiving the message, a core network updates a downlink general packet radio service tunneling protocol (general packet radio service tunneling protocol, GPRS tunneling protocol)-U data plane, and modifies a GTP-U address on a base station side to an address of the target gNodeB #1.

S470: The target gNodeB #1 sends information #F1, and the UE #1 receives the information #F 1.

Specifically, the target gNodeB #1 sends the information #F1 to the UE #1, where the information #F1 indicates the UE #1 to perform downlink data feedback with the target gNodeB #1.

The information #F1 may include at least one of the following information:
an ID of a downlink HARQ process for which the UE #1 needs to perform feedback, an identifier of the target gNodeB #1, and a time-frequency resource occupied by feedback data.

The information #F1 may be used to further ensure continuity of the HARQ process when the UE #1 is handed over to the target cell #1. That is, if some information in the information #C fails to be received by the UE #1 (because the UE #1 sends the response information to the target cell #1 in S450, the target cell #1 learns which HARQ processes are successfully switched and which HARQ processes are not successfully switched), the information #F1 may be sent to continue an unfinished downlink HARQ process, to ensure continuity of the HARQ process.

S480: The source gNodeB #1 releases a connection to the UE #1.

For a specific step, refer to the step S280. Details are not described herein again.

In a possible implementation, if the source gNodeB #1 has downlink data that is not completely sent, the source gNodeB #1 may continue to send the downlink data. After the downlink data is completely sent, a new HARQ process is formed, but new data is no longer sent. In this case, related data of the new HARQ process needs to be sent to the target gNodeB #1 again. For specific content of the related data of the new HARQ process, refer to the information #B1. In this case, if the source gNodeB #1 receives data delivered by a UPF or there is downlink data that has not been sent in a buffer of the source gNodeB #1, the source gNodeB #1 needs to send the downlink data to the target gNodeB #1. The downlink data may be included in the information #B1.

In a possible implementation, the target gNodeB #1 delivers measurement control information of the target cell #1 to the UE #1 by using an RRC reconfiguration (RRCReconfiguration) message. After receiving the new measurement control information delivered by the target gNodeB #1, the UE #1 returns an RRC reconfiguration complete (RRCReconfigurationComplete) message.

According to the method 200, 300, or 400, if there is an Xn interface between a plurality of satellites, when the UE #1 needs to perform inter-cell handover, a HARQ process performed by the UE #1 can be continuous. This enhances a latency advantage of satellite communication, and achieves a soft combination coding gain.

In embodiments of this application, when a coverage area of each satellite is a cell, cell handover for a user is actually inter-satellite handover. Two satellites before and after the handover are connected through an NG interface and two core networks, and the two core networks are managed by a same AMF.

This application considers how to switch an uplink HARQ process in this scenario. For example, as shown in a method 500 in FIG. 7, FIG. 7 is a schematic flowchart of another example according to an embodiment of this application. In FIG. 7, a source gNodeB #1 is in a coverage area of a satellite #1 (not shown in FIG. 7) (in other words, the source gNodeB #1 is in a coverage area of a source cell #1), and a target gNodeB #1 is in a coverage area of a satellite #2 (not shown in FIG. 7) (in other words, the target gNodeB #1 is in a coverage area of a target cell #1). An Xn interface is formed between a satellite #1 and a core network #1 (not shown in FIG. 7), an Xn interface is formed between a satellite #2 and a core network #2, and the core network #1 and the core network #2 (not shown in FIG. 7) are managed by a same AMF. The source gNodeB #1 is a base station in a coverage area of a serving cell of UE #1 before cell handover, and the target gNodeB #1 is a base station in a coverage area of a target serving cell of the cell handover performed by the UE #1.

In S510, the UE #1 performs cell handover based on measurement control information #A.

Specifically, there may be the following steps.

Step a: The source gNodeB #1 delivers the measurement control information #A to the UE #1 by using an RRC reconfiguration (RRCReconfiguration) message. For the measurement control information #A, refer to the description in the method 200. Details are not described herein again.

Step b: The UE #1 responds to the source gNodeB #1 by using an RRC reconfiguration complete (ReconfigurationComplete) message.

Step c: The UE #1 performs measurement based on the received measurement control information #A. After measuring a cell and determining that a condition of a trigger event of the measurement is met, the UE #1 reports measurement report information #A1 to the source gNodeB #1. The measurement report information #A1 includes information such as signal quality of the measured cell.

Step d: After receiving the measurement report information #A1, the source gNodeB #1 determines a handover policy and a target cell (or frequency) based on the measurement report information #A1.

Step e: The source gNodeB #1 sends a handover request (handover required) message to an AMF #1 through an NG link, to initiate a handover request, where the message includes an ID of the target gNodeB #1, a list of PDU sessions for performing data forwarding, and the like.

Step f: The AMF #1 sends a handover request message to the target gNodeB #1 to which the specified target cell #1 belongs, to initiate a handover request, and the target gNodeB #1 identifies the UE #1 based on a trace identifier (TraceID) and a subscriber profile identity (subscriber profile identity, SPID) in the message.

Step g: After receiving the handover request, the target gNodeB #1 performs admission control, and allocates an instance and a transmission resource to the UE #1 after admission is allowed.

Step h: The target gNodeB #1 returns a handover request acknowledgement (handover required acknowledge) message to the AMF #1, to allow incoming handover. If incoming handover of some PDU sessions fails, the message needs to carry a list of failed PDU sessions.

Step i: The AMF #1 sends a handover command (handover command) message to the source gNodeB #1, where the message includes an address of the target gNodeB #1 and a tunnel endpoint identifier (tunnel endpoint identifier, TEID) list for forwarding, including a list of bearers that need to be released.

Step j: The source gNodeB #1 sends an RRC reconfiguration message to the UE, to require the UE to perform handover to the target cell #1.

Step k: The source gNodeB #1 sends a PDCP SN number to the AMF #1 through uplink RAN status transfer (uplink RAN status transfer).

Step l: The AMF #1 sends the PDCP SN number to the target gNodeB #1 by using a downlink RAN status transfer (downlink RAN status transfer) message, and then performs corresponding buffered data and UPF data transmission.

S520: The source gNodeB #1 sends information #B to the target gNodeB #1 through the AMF #1.

The information #B indicates an unfinished uplink HARQ process between the source gNodeB #1 and the UE #1. For content of the information #B, refer to the description in the step S220. Details are not described herein again.

The source gNodeB #1 sends the information #B, so that the target gNodeB #1 learns of statuses and information of all the current unfinished uplink HARQ processes, and has a capability of taking over the current HARQ processes.

S530: The UE #1 establishes a connection with the target gNodeB #1.

Specifically, the following steps are included.

Step a: The UE #1 initiates contention-free random access in the target cell #1 in which the target gNodeB #1 is located, and sends a message 1 (message 1, MSG1), where the message 1 includes a random access preamble (preamble) sequence.

Step b: The target gNodeB #1 makes a random access response, and sends a message 2 (message 2, MSG2).

Step c: The UE #1 sends RRC reconfiguration complete information to the target gNodeB #1, and the UE #1 is handed over to the target cell #1 over an air interface.

Currently, in a time period (which may be referred to as a time period #A1) from an end moment of step j in S510 (that is, a moment at which the UE #1 successfully decodes the RRC reconfiguration message sent by the source gNodeB #1) to an end moment of step c in S530 (that is, a moment at which the target gNodeB #1 successfully decodes the RRC reconfiguration complete information), the UE #1 no longer sends uplink data to the source gNodeB #1. This means that the UE #1 interrupts transmission of uplink retransmitted data of an unfinished uplink HARQ process, or interrupts transmission of feedback data (ACK or NACK) of an unfinished downlink HARQ process, or interrupts transmission of data of a new uplink HARQ process.

For this problem, the following solution is designed in this application.

In the time period #A, the UE #1 may continue to send uplink data #A to the source gNodeB #1, where the uplink data #A includes uplink retransmitted data of an unfinished uplink HARQ process, and/or feedback data (ACK or NACK) of an unfinished downlink HARQ process.

In a possible implementation, the uplink data #A may further include data of a new uplink HARQ process.

In the foregoing solution, because data of a HARQ process between the UE #1 and the source gNodeB #1 is updated, updated data of the HARQ process needs to be transferred between the source gNodeB #1 and the target gNodeB #1. Therefore, the following solution is designed in this application.

After sending the RRC reconfiguration message to the UE #1 in step j in S510, the source gNodeB #1 sends information #Bg to the target gNodeB #1 after duration #A1, and starts to periodically send information #Bg1, information #Bg2, and the like to the target gNodeB #1, until the source gNodeB #1 receives end marker (end marker) information sent by the AMF #1. The information #Bg, the information #Bg1, the information #Bg2, and the like are updated information #B based on the uplink data #A sent by the UE #1 in the time period #A1. The information #Bg, the information #Bg1, the information #Bg2, and the like may include data corresponding to an updated HARQ process, and may include data corresponding to a non-updated HARQ process.

In a possible implementation, the duration #A1 may be predefined.

In a possible implementation, a value of the duration #A1 may be (2×RTT3-RTT4), where the RTT3 is a round-trip latency of signal transmission between the UE #1 and the source gNodeB #1 or the target gNodeB #1, and the RTT4 is a sum of a latency in sending a signal from the source gNodeB #1 to a core network and a latency in sending a signal from the core network to the target gNodeB #1 (in the method 500, data transmission between the source gNodeB #1 and the target gNodeB #1 needs to go through a core network side (the AMF #1)).

It should be noted that the value of the duration #A1 may alternatively be greater than (2×RTT3-RTT4), for example, when a decoding error occurs on the UE #1 or the target gNodeB #1 in the time period #A1.

For example, a value of the RTT1 is 540 ms.

In a possible implementation, a length of the foregoing cycle may be predefined.

In a possible implementation, the length of the foregoing cycle may be n times (0.5×RTT3), where n is an integer greater than 0.

When the UE #1 and the target gNodeB #1 repeatedly send interaction signaling in the time period #A1, and the target gNodeB #1 times out in receiving the RRC reconfiguration complete information, the foregoing solution resolves a problem that the source gNodeB #1 cannot send, to the target gNodeB #1 in a timely manner, a status of an updated HARQ process between the source gNodeB #1 and the UE #1.

S540: The target gNodeB #1 sends information #C, and the UE #1 receives the information #C.

For content of the information #C, refer to the step S240. Details are not described herein again.

After receiving the information #C, the UE #1 preferentially responds to a HARQ operation according to an indication of the information #C delivered by the target gNodeB #1. For example, for an unfinished uplink HARQ process #1, the UE #1 may retransmit uplink data of the uplink HARQ process #1 to the source gNodeB #1 on a time-frequency resource #1, or may retransmit uplink data of the uplink HARQ process #1 to the target gNodeB #1 on a time-frequency resource #2 according to an indication of the information #C. In this case, the UE #1 preferentially selects the latter solution, that is, retransmits the uplink data of the uplink HARQ process #1 to the target gNodeB #1 on the time-frequency resource #2.

In a possible implementation, the information #C may be downlink control information (downlink control information, DCI) and carried in RRC signaling.

S550: The UE #1 sends response information #D, and the target gNodeB #1 receives the response information #D.

Specifically, the UE #1 sends the response information #D based on the information #C. For content of the response information #D, refer to the step S250. Details are not described herein again.

S560: The target gNodeB #1 sends information #E1, and the AMF #1 receives the information #E1.

Specifically, the information #E1 may be a handover notification (handover notify) message, and is used to notify the AMF #1 that the UE #1 has accessed the target cell #1 and NG-based handover has been completed.

S570: The target gNodeB #1 sends information #F, and the UE #1 receives the information #F.

Specifically, the target gNodeB #1 sends the information #F to the UE #1. The information #F indicates the UE #1 to retransmit the uplink data to the target gNodeB #1. For content of the information #F, refer to the method 200. Details are not described herein again.

S580: The source gNodeB #1 releases a connection to the UE #1.

Specifically, there may be the following steps.

Step a: The AMF #1 sends a UE context release command (UE context release command) message to the source gNodeB #1. After receiving the message, the source gNodeB #1 releases the connection to the UE #1.

In a possible implementation, after the source gNodeB #1 sends the information #B and before the source gNodeB #1 releases the connection to the UE #1, if a new uplink HARQ process is generated, for a processing manner of the source gNodeB #1, refer to Manner 1 and Manner 2 in the step S280. Details are not described herein again.

In a possible implementation, the target gNodeB #1 delivers measurement control information of a new cell to the UE #1 by using an RRC reconfiguration (RRCReconfiguration) message. After receiving the new measurement control information delivered by the target gNodeB #1, the UE #1 returns an RRC reconfiguration complete message (RRCReconfigurationComplete).

This application further considers how to switch a downlink HARQ process in the scenario of the method 500, for example, a method 600. For descriptions of a source gNodeB #1, a target gNodeB #1, and an AMF #1, refer to the descriptions in the method 500. Details are not described herein again.

In S610, UE #1 performs cell handover based on measurement control information #A.

For a specific step, refer to the step S510. Details are not described herein again.

S620: The UE #1 establishes a connection with the target gNodeB #1.

For a specific step, refer to the step S530. Details are not described herein again.

In a possible implementation, the UE #1 replicates data of an unfinished HARQ process in a first MAC entity to a second MAC entity. The first MAC entity is a MAC entity between the UE #1 and the source gNodeB #1, and the second MAC entity is a MAC entity between the UE #1 and the target gNodeB #1.

S630: The target gNodeB #1 sends information #E1, and the AMF #1 receives the information #E1.

For specific content, refer to the step S560. Details are not described herein again.

S640: The source gNodeB #1 releases a connection to the UE #1.

Specifically, there may be the following steps.

Step a: The AMF #1 sends a UE context release command (UE context release command) message to the source gNodeB #1. After receiving the message, the source gNodeB #1 releases the connection to the UE #1.

In a possible implementation, if the source gNodeB #1 still needs to send, to the UE #1, downlink data that is not completely sent, before releasing the connection to the UE #1, the source gNodeB #1 may continue to send the downlink data that is not completely sent, but no longer send new downlink data.

S650: The source gNodeB #1 sends information #B1 to the target gNodeB #1.

The information #B1 indicates an unfinished downlink HARQ process between the source gNodeB #1 and the UE #1. For content of the information #B1, refer to the step S350. Details are not described herein again.

In a possible implementation, if the source gNodeB #1 receives data delivered by a UPF or there is downlink data that has not been sent in a buffer of the source gNodeB #1, the source gNodeB #1 needs to send the downlink data to the target gNodeB #1. The downlink data may be included in the information #B1.

The source gNodeB #1 sends the information #B1, so that the target gNodeB #1 learns of statuses and information of all the current unfinished downlink HARQ processes, and has a capability of taking over the current HARQ processes.

S660: The target gNodeB #1 sends information #C3, and the UE #1 receives the information #C3.

The information #C3 indicates the UE #1 to send feedback data for all the current unfinished downlink HARQ processes to the target gNodeB #1, and indicates a time-frequency resource occupied by the feedback data. For specific content of the information #C3, refer to the step S360. Details are not described herein again.

After receiving the information #C3, the UE #1 preferentially responds to a HARQ operation according to an indication of the information #C3 delivered by the target gNodeB #1. For example, feedback data of the UE #1 for the unfinished downlink HARQ process #1 may be sent to the source gNodeB #1 on a time-frequency resource #1, or may be sent to the target gNodeB #1 on a time-frequency resource #2 according to the indication of the information #C3. In this case, the UE #1 preferentially selects the latter solution, that is, sends the feedback data to the target gNodeB #1 on the time-frequency resource #2.

S670: The UE #1 sends response information #D1, and the target gNodeB #1 receives the response information #D1.

Specifically, the UE #1 makes, by using the response information #D1, a feedback to the information #C3 sent by the target gNodeB #1.

For example, the response information #D1 includes an ID of a downlink HARQ process and/or corresponding ACK or NACK data.

In the scenario of the method 500, for switching of a downlink HARQ process, this application further provides a method 700. For descriptions of a source gNodeB #1, a target gNodeB #1, and an AMF #1, refer to the descriptions in the method 500. Details are not described herein again.

S710: UE #1 performs cell handover based on measurement control information #A.

For a specific step, refer to the step S510. Details are not described herein again.

S720: The source gNodeB #1 sends information #B1 to the target gNodeB #1.

For content of the information #B1, refer to the step S350. Details are not described herein again.

S730: The UE #1 establishes a connection with the target gNodeB #1.

For a specific step, refer to the step S530. Details are not described herein again.

Currently, in a time period (which may be referred to as a time period #B1) from a start moment (that is, a moment after the source gNodeB #1 sends the RRC reconfiguration message) of step j in S710 to an end moment (that is, a moment at which the target gNodeB #1 successfully decodes the RRC reconfiguration completion information) of step c in S730, the source gNodeB #1 no longer sends downlink data to the UE #1. This means that the source gNodeB #1 interrupts transmission of downlink retransmitted data of an unfinished downlink HARQ process, or interrupts transmission of feedback data (ACK or NACK) of an unfinished uplink HARQ process, or interrupts transmission of data of a new downlink HARQ process.

For this problem, the following solution is designed in this application.

In the time period #B1, the source gNodeB #1 may continue to send downlink data #A to the UE #1, where the downlink data #A includes downlink retransmitted data of an unfinished downlink HARQ process, and/or feedback data (ACK or NACK) of an unfinished uplink HARQ process.

In a possible implementation, the downlink data #A may further include data of a new downlink HARQ process, for example, downlink user plane data that has been allocated by a UPF #1 to the source gNodeB #1.

In the foregoing solution, because data of a HARQ process between the UE #1 and the source gNodeB #1 is updated, updated data of the HARQ process needs to be transferred between the source gNodeB #1 and the target gNodeB #1. Therefore, the following solution is designed in this application.

After sending the RRC reconfiguration message to the UE #1 in step j in S510, the source gNodeB #1 sends information #Bg to the target gNodeB #1 after duration #A1, and starts to periodically send information #Bg1, information #Bg2, and the like to the target gNodeB #1, until the source gNodeB #1 receives end marker (end marker) information sent by the AMF #1. The information #Bg, the information #Bg1, the information #Bg2, and the like are updated information #B based on the uplink data #A sent by the UE #1 in the time period #A1. The information #Bg, the information #Bg1, the information #Bg2, and the like may include data corresponding to an updated HARQ process, and may include data corresponding to a non-updated HARQ process.

For the duration #A1, refer to the description of the method 500. Details are not described herein again.

For a length of the foregoing cycle, refer to the description of the method 500. Details are not described herein again.

When the UE #1 and the target gNodeB #1 repeatedly send interaction signaling in the time period #A1, and the target gNodeB #1 times out in receiving the RRC reconfiguration complete information, the foregoing solution resolves a problem that the source gNodeB #1 cannot send, to the target gNodeB #1 in a timely manner, a status of an updated HARQ process between the source gNodeB #1 and the UE #1.

S740: The target gNodeB #1 sends information #C3, and the UE #1 receives the information #C3.

For content of the information #C3, refer to the step S360. Details are not described herein again.

In a possible implementation, after the source gNodeB #1 sends the information #B1 to the target gNodeB #1 and before the target gNodeB #1 sends the information #C3, if the source gNodeB #1 sends new downlink data to the UE #1 or receives new feedback data from the UE #1, the source gNodeB #1 needs to synchronize the generated new status to the target gNodeB #1. For example, the source gNodeB #1 needs to send, to the target gNodeB #1, data of all HARQ processes corresponding to the new downlink data and IDs of the corresponding HARQ processes. For another example, the source gNodeB #1 needs to send received new feedback data of the UE #1 and an ID of a corresponding HARQ process to the target gNodeB #1, so that the target gNodeB #1 learns of latest data of an unfinished HARQ process. After receiving the new HARQ process data sent by the source gNodeB #1, the target gNodeB #1 may include control information corresponding to the new HARQ process data in the information #C3, and send the information #C3 to the UE #1. For specific content, refer to the information #C3. Details are not described herein again.

S750: The UE #1 sends response information #D1, and the target gNodeB #1 receives the response information #D1.

For the response information #D1, refer to the step S370. Details are not described herein again.

S760: The target gNodeB #1 sends information #E1, and the AMF #1 receives the information #E1.

For content of the information #E1, refer to the step S560. Details are not described herein again.

S770: The target gNodeB #1 sends information #F1, and the UE #1 receives the information #F 1.

Specifically, the information #F1 indicates the UE #1 to perform downlink data feedback with the target gNodeB #1. For content of the information #F1, refer to the step S470. Details are not described herein again.

S780: The source gNodeB #1 releases a connection to the UE #1.

For a specific step, refer to the step S580. Details are not described herein again.

In a possible implementation, if the source gNodeB #1 has downlink data that is not completely sent, the source gNodeB #1 may continue to send the downlink data. After the downlink data is completely sent, a new HARQ process is formed, but new data is no longer sent. In this case, related data of the new HARQ process needs to be sent to the target gNodeB #1 again. For specific content of the related data of the new HARQ process, refer to the information #B1. In this case, if the source gNodeB #1 receives data delivered by a UPF or there is downlink data that has not been sent in a buffer of the source gNodeB #1, the source gNodeB #1 needs to send the downlink data to the target gNodeB #1. The downlink data may be included in the information #B1.

In a possible implementation, the target gNodeB #1 delivers measurement control information of a new cell to the UE #1 by using an RRC reconfiguration (RRCReconfiguration) message. After receiving the new measurement control information delivered by the target gNodeB #1, the UE #1 returns an RRC reconfiguration complete message (RRCReconfigurationComplete).

According to the method 500, 600, or 700, if there is no Xn interface between a plurality of satellites, but the satellites are still managed by a same AMF and there is an NG interface between the satellites, when the UE #1 needs to perform inter-cell handover, a HARQ process performed by the UE #1 can be continuous. This enhances a latency advantage of satellite communication, and achieves a soft combination coding gain.

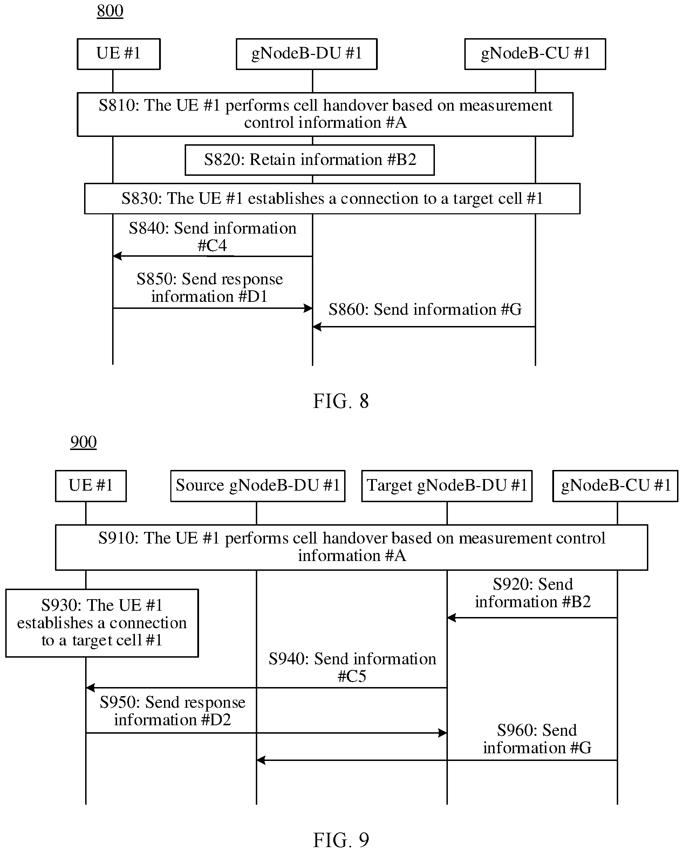

In embodiments of this application, it is further considered that cells before and after UE handover are managed by a same base station (gNodeB-DU), the cells before and after the UE handover belong to a same gNodeB-DU, and the cells before and after the UE handover are controlled by a same gNodeB-CU. In this scenario, a plurality of beams of one satellite are divided into different cells, and inter-cell handover for a user is actually handover between different cells served by a same satellite. For example, as shown in a method 800 in FIG. 8, FIG. 8 is a schematic flowchart of another example according to an embodiment of this application. In FIG. 8, cells before and after UE #1 is handed over (a source cell #1 before the handover and a target cell #1 after the handover) belong to a gNodeB-DU #1, and are controlled by a same gNodeB-CU.

In S810, the UE #1 performs cell handover based on measurement control information #A.

Specifically, there may be the following steps.

Step a: The gNodeB-CU #1 delivers the measurement control information #A to the UE #1 by using an RRC reconfiguration (RRC reconfiguration) message. For content of the measurement control information #A, refer to the method 200.

Step b: The UE #1 returns an RRC reconfiguration complete (RRC reconfiguration complete) message to the gNodeB-CU #1.

Step c: The UE #1 performs measurement based on the measurement control information #A, and reports a measurement report of a neighboring cell to the gNodeB-CU #1.

Step d: Based on a physical cell identifier (physical cell identifier, PCI) PCI carried in the measurement report, the gNodeB-CU #1 determines that the target cell #1 and the source cell #1 of handover belong to a same base station, and starts an intra-station handover procedure. The target cell #1 makes an admission decision based on a context of the UE #1 in the source cell #1.

Step e: The gNodeB-CU #1 sends a UE context setup request (UE context setup request) message to the gNodeB-DU #1, to apply, for the target cell #1, to the gNodeB-DU #1 for a resource for the UE #1.

Step f: If the gNodeB-DU #1 successfully allocates the resource to the UE #1, the gNodeB-DU #1 returns a UE context setup response (UE context setup response) message to the gNodeB-CU #1.

Step g: The gNodeB-CU #1 sends a UE context modification request (UE context modification request) message to the gNodeB-DU #1, to indicate the gNodeB-DU #1 to deliver indication information for stopping scheduling L2 signaling of the source cell #1.

Step h: The gNodeB-DU #1 returns a UE context modification response (UE context modification response) message to the gNodeB-CU #1.

S820: The gNodeB-DU #1 retains information #B2, that is, does not clear the information #B2.

That is, the source cell #1 copies the information #B2 to memory corresponding to the target cell #1, and both the source cell #1 and the target cell #1 are managed by the gNodeB-DU #1.

The information #B2 indicates an unfinished HARQ process between the source cell #1 and the UE #1

When the unfinished HARQ process between the source cell #1 and the UE #1 is a downlink HARQ process, the information #B2 may include original downlink HARQ process information corresponding to each unfinished downlink HARQ process. For example, the information #B2 may include one or more of the following information:
redundancy version data corresponding to each unfinished downlink HARQ process, and NACK data that is sent by the UE #1 and that corresponds to each unfinished downlink HARQ process;
IDs of all current unfinished downlink HARQ processes; and
redundancy version numbers of all the current unfinished downlink HARQ processes, for example, a version in which redundancy data of the unfinished downlink HARQ processes has been sent.

When the unfinished HARQ process between the source cell #1 and the UE #1 is an uplink HARQ process, the information #B2 may include one or more of the following information:
buffered data of all current unfinished uplink HARQ processes, including at least one of data received by the source gNodeB #1 and data decoded by the source gNodeB #1 that correspond to each unfinished uplink HARQ process; and
IDs of all the current unfinished uplink HARQ processes.

The gNodeB-DU #1 retains the information #B2, so that the target cell #1 learns of statuses and information of all current HARQ processes, and has a capability of taking over the current HARQ processes.

S830: The UE #1 establishes a connection with the target cell #1.

Specifically, there may be the following steps.

Step a: The gNodeB-CU #1 sends an RRC reconfiguration message to the UE #1, where the message carries a target frequency of the target cell #1, a PCI of the target cell #1, and a cell radio network temporary identifier (cell radio network temporary identifier, C-RNTI) and a dedicated random access preamble that are configured for the UE #1.

Step b: The UE #1 initiates contention-free random access in the target cell #1, and sends a message 1 (message 1, MSG1), where the message 1 includes a random access preamble sequence.

Step c: The gNodeB-DU #1 makes a random access response, and sends a message 2 (message 2, MSG2).

Step d: The UE #1 sends RRC reconfiguration complete information to the gNodeB-CU #1, and the UE #1 accesses the target cell #1.

Currently, in a time period (which may be referred to as a time period #A2) from an end moment of step a in S830 (that is, a moment at which the UE #1 successfully decodes the RRC reconfiguration message sent by the gNodeB-CU #1) to an end moment of step d in S830 (that is, a moment at which the gNodeB-CU #1 successfully decodes the RRC reconfiguration complete information), the UE #1 no longer sends uplink data to the source cell #1. This means that the UE #1 interrupts transmission of uplink retransmitted data of an unfinished uplink HARQ process, or interrupts transmission of feedback data (ACK or NACK) of an unfinished downlink HARQ process, or interrupts transmission of data of a new uplink HARQ process.

For this problem, the following solution is designed in this application.

In the time period #A2, the UE #1 may continue to send uplink data #A to the source cell #1, where the uplink data #A includes uplink retransmitted data of an unfinished uplink HARQ process, and/or feedback data (ACK or NACK) of an unfinished downlink HARQ process.

In a possible implementation, the uplink data #A may further include uplink data of a new HARQ process.

In the foregoing solution, because data of a HARQ process between the UE #1 and the source cell #1 is updated, the source cell #1 needs to copy, to the memory corresponding to the target cell #1, the data of the HARQ process that currently needs to be updated. In this case, the following solution is designed in this application.

After the gNodeB-CU #1 sends the RRC reconfiguration message to the UE #1 in step a in S830, the source cell #1 copies information #B2g to the target cell #1 after the duration #A2, and starts to periodically send information #B2g1, information #B2g2, and the like to the target cell #1, until the source cell #1 receives a UE context release command (UE context release command) sent by the gNodeB-CU #1. The information #B2g, the information #B2g1, the information #B2g2, and the like are updated information #B2 based on the uplink data #A sent by the UE #1 in the time period #A2. The information #B2g, the information #B2g1, the information #B2g2, and the like may include data corresponding to an updated HARQ process, and may include data corresponding to a non-updated HARQ process.

In a possible implementation, the duration #A2 may be predefined.

In a possible implementation, a value of the duration #A2 may be (2×RTT5), where the RTT5 is a round-trip latency of signal transmission between the UE #1 and the gNodeB-DU #1.

For example, a value of the RTT5 is 540 ms.

It should be noted that the value of the duration #A2 may alternatively be greater than (2×RTT5), for example, when a decoding error occurs on the UE #1 or the target cell #1 in the time period #A2

In a possible implementation, a length of the foregoing cycle may be predefined.

In a possible implementation, the length of the foregoing cycle may be n times (0.5×RTT5), where n is an integer greater than 0.

When the UE #1 and the target cell #1 repeatedly send interaction signaling in the time period #A2, and the target cell #1 times out in receiving the RRC reconfiguration complete information, the foregoing solution resolves a problem that the source cell #1 cannot send, to the target cell #1 in a timely manner, a status of an updated HARQ process between the source cell #1 and the UE #1.

Currently, in a time period (which may be referred to as a time period #B2) from a start moment (that is, a moment after the gNodeB-CU #1 sends the RRC reconfiguration message) of step a in S830 to an end moment (that is, a moment at which the gNodeB-CU #1 successfully decodes the RRC reconfiguration completion information) of step d in S830, the source cell #1 no longer sends downlink data to the UE #1. This means that the source cell #1 interrupts transmission of downlink retransmitted data of an unfinished downlink HARQ process, or interrupts transmission of feedback data (ACK or NACK) of an unfinished uplink HARQ process, or interrupts transmission of data of a new downlink HARQ process.

For this problem, the following solution is designed in this application.

In the time period #B2, the source cell #1 may continue to send downlink data #A to the UE #1, where the downlink data #A includes downlink retransmitted data of an unfinished downlink HARQ process, and/or feedback data (ACK or NACK) of an unfinished uplink HARQ process.

In a possible implementation, the downlink data #A may further include downlink data of a new HARQ process, for example, downlink user plane data that has been allocated by a UPF #1 to the source gNodeB #1.

In the foregoing solution, because data of a HARQ process between the UE #1 and the source cell #1 is updated, the source cell #1 needs to copy, to the memory corresponding to the target cell #1, the data of the HARQ process that currently needs to be updated. In this case, the following solution is designed in this application.

After the gNodeB-CU #1 sends the RRC reconfiguration message to the UE #1 in step a in S830, the source cell #1 copies information #B2g to the target cell #1 after the duration #A2, and starts to periodically send information #B2g1, information #B2g2, and the like to the target cell #1, until the source cell #1 receives a UE context release command (UE context release command) sent by the gNodeB-CU #1. The information #B2g, the information #B2g1, the information #B2g2, and the like are updated information #B2 based on the uplink data #A sent by the UE #1 in the time period #A2. The information #B2g, the information #B2g1, the information #B2g2, and the like may include data corresponding to an updated HARQ process, and may include data corresponding to a non-updated HARQ process.

For the duration #A2, refer to the foregoing description. Details are not described herein again.

For a length of the cycle, refer to the foregoing description. Details are not described herein again.

When the UE #1 and the target cell #1 repeatedly send interaction signaling in the time period #B2, and the target cell #1 times out in receiving the RRC reconfiguration complete information, the foregoing solution resolves a problem that the source cell #1 cannot send, to the target cell #1 in a timely manner, a status of an updated HARQ process between the source cell #1 and the UE #1.

S840: The gNodeB-DU #1 sends information #C4, and the UE #1 receives the information #C4.

The information #C4 includes at least one of the following information:
information #C41, indicating whether all current unfinished uplink HARQ processes of the UE #1 need to be retransmitted, where for example, the information #C41 may include an ID of an uplink HARQ process that needs to be retransmitted and NACK data, or an ID of an uplink HARQ process that does not need to be retransmitted and ACK data, and it should be understood that the uplink HARQ process that needs to be retransmitted or the uplink HARQ process that does not need to be retransmitted herein is included in all the unfinished uplink HARQ processes;
information #C41a, indicating a time-frequency resource occupied by uplink data corresponding to an uplink HARQ process that needs to be retransmitted by the UE #1 and an identifier of the gNodeB-DU #1, where for example, the information #C41a may include an ID of the uplink HARQ process that needs to be retransmitted, the corresponding time-frequency resource, and the identifier of the gNodeB-DU #1;
information #C42, indicating a resource that is of the target cell #1 and that is allocated by the gNodeB-DU #1 to the UE #1, where the resource may be used to transmit new uplink data or downlink data or transmit HARQ data of a new HARQ process between the target cell #1 and the UE #1; and
information #C43, indicating at least one of feedback data for all current unfinished downlink HARQ processes that is sent by the UE #1 to the target cell, and a time-frequency resource occupied by the feedback data. For example, the information #C43 may include at least one of the following information:
   an ID of a current unfinished downlink HARQ process, a time-frequency resource occupied by feedback data corresponding to the ID of the current unfinished downlink HARQ process, and the identifier of the gNodeB-DU #1.

In a possible implementation, the information #C43 may alternatively be redundancy version data of the target cell for downlink data for which the UE #1 feeds back NACK data (that is, retransmitted downlink data), and an ID of a corresponding downlink HARQ process.

After the UE #1 receives the information #C4, the HARQ process related to the ID of the corresponding HARQ process responds to a HARQ operation preferentially according to an indication of the information #C4 delivered by the target cell #1. For example, the UE #1 may send an ACK 1 to the source cell #1 on a time-frequency resource #1, or may send an ACK 1 to the target cell #1 on a time-frequency resource #2 according to an indication of the information #C43. In this case, the UE #1 preferentially selects the latter solution to send the ACK 1, that is, sends the ACK 1 to the target cell #1 on the time-frequency resource #2.

In a possible implementation, the information #C4 may be included in DCI and carried in RRC signaling.

In a possible implementation, in a process in which the UE #1 establishes a connection with the target cell #1, if the source cell #1 sends new downlink data to the UE #1 or receives new feedback data from the UE #1, the gNodeB-DU #1 needs to retain the generated new status. For example, the gNodeB-DU #1 needs to retain data of all HARQ processes corresponding to the new downlink data and IDs of the corresponding HARQ processes. For another example, the gNodeB-DU #1 needs to retain received new feedback data of the UE #1 and an ID of a corresponding HARQ process, so that the target cell #1 learns of latest data of an unfinished HARQ process. After learning of the new HARQ process data, the target cell #1 may include control information corresponding to the new HARQ process data in the information #C4, and send the information #C4 to the UE #1. For specific content, refer to the information #C4. Details are not described herein again.

S850: The UE #1 sends response information #D1, and the target cell #1 receives the response information #D1.

Specifically, the UE #1 sends the response information #D1 based on the information #C4.

For example, the response information #D1 includes ACK or NACK data.

If the information #C4 includes the information #C41a, the UE #1 needs to send, on a time-frequency resource indicated by the information #C41a, uplink data that needs to be retransmitted.

If the information #C4 includes the information #C43, the UE #1 needs to send, on a time-frequency resource indicated by the information #C43, feedback data for current downlink data sent by the source cell #1 to the UE #1.

S860: The gNodeB-CU #1 sends information #G, and the gNodeB-DU #1 receives the information #G.

Specifically, the information #G includes a UE context release command (UE context release command). After receiving the information #G, the source cell #1 releases a connection to the UE #1.

In a possible implementation, before the source cell #1 releases the connection to the UE #1, if a new uplink HARQ process is generated, processing may be performed in the following two manners.

### Manner 1

The source cell #1 continues the new uplink HARQ process, and performs uplink data feedback for the UE #1, until the new uplink HARQ process ends.

### Manner 2

The gNodeB-DU #1 retains related data of a HARQ process for which a NACK needs to be returned. For specific content, refer to the foregoing information #B2. Details are not described herein again. For a HARQ process for which an ACK needs to be returned, the source cell #1 sends ACK data to the UE #1. After retaining the data, the gNodeB-DU #1 may send, to the UE #1, information indicating whether the data needs to be retransmitted and a time-frequency resource of the target cell #1 that is occupied if the data needs to be retransmitted. For specific content, refer to the information #C4.

In a possible implementation, if the source cell #1 has downlink data that is not completely sent, the source cell #1 may continue to send the downlink data. After the downlink data is completely sent, a new HARQ process is formed, but new downlink data is no longer sent. In this case, the gNodeB-DU #1 needs to retain related data of the new HARQ process. For specific content of the related data of the new HARQ process, refer to the information #B2. In this case, if the source cell #1 receives data sent by a UPF or there is downlink data that has not been sent in a buffer of the source cell #1, the gNodeB-DU #1 needs to retain the downlink data that has not been sent, so that the target cell #1 can continue to send the downlink data that has not been sent.

According to the method 800, if cells before and after UE handover belong to a same satellite, and different beams belong to different cells, when the UE needs to perform inter-cell handover, a HARQ process performed by the UE can be continuous. This enhances a latency advantage of satellite communication, and achieves a soft combination coding gain.

In embodiments of this application, it is further considered that cells before and after UE handover are managed by a same base station (gNodeB), but belong to different gNodeB-DUs. In this scenario, a plurality of satellites in a satellite cluster are gNodeB-DUs, and a land gateway station or another satellite serves as a gNodeB-CU. An inter-cell handover of the UE is actually handover between different satellites. The gNodeB-DU and the gNodeB-CU are connected through a high-speed radio link. For example, as shown in a method 900 in FIG. 9, FIG. 9 is a schematic flowchart of another example according to an embodiment of this application. In FIG. 9, cells before and after handover of the UE #1 (a source cell #1 before the handover and a target cell #1 after the handover) respectively belong to a source gNodeB-DU #1 and a target gNodeB-DU #1, and are controlled by a gNodeB-CU #1. In addition, the source gNodeB-DU #1, the target gNodeB-DU #1, and the gNodeB-CU #1 belong to a same base station. The source gNodeB-DU or the target gNodeB-DU in the method 900 may correspond to one satellite, or may correspond to a plurality of satellites.

In S910, the UE #1 performs cell handover based on measurement control information #A.

Specifically, there may be the following steps.

Step a: The gNodeB-CU #1 delivers the measurement control information #A to the UE #1 by using an RRC reconfiguration (RRC reconfiguration) message. For content of the measurement control information #A, refer to the method 200.

Step b: The UE #1 returns an RRC reconfiguration complete (RRC reconfiguration complete) message to the gNodeB-CU #1.

Step c: The UE #1 performs measurement based on the measurement control information #A, and reports a measurement report of a neighboring cell to the gNodeB-CU #1.

Step d: Based on a PCI of the target cell carried in the measurement report, the gNodeB-CU #1 determines that the target cell #1 and the source cell #1 of the handover belong to different DUs of a same gNodeB, and starts an intra-station cross-DU handover procedure. The target cell #1 makes an admission decision based on a context of the UE in the source cell #1.

Step e: The gNodeB-CU #1 sends a UE context setup request (UE context setup request) message to the target gNodeB-DU #1, to apply, for the target cell #1, to the target gNodeB-DU #1 for a resource for the UE #1.

Step f: If the target gNodeB-DU #1 successfully allocates the resource to the UE #1, the target gNodeB-DU #1 returns a UE context setup response (UE context setup response) message to the gNodeB-CU #1.

Step g: The gNodeB-CU #1 sends a UE context modification request (UE context modification request) message to the target gNodeB-DU #1, to indicate the source gNodeB-DU #1 to deliver indication information for stopping scheduling L2 signaling of the source cell #1.

Step h: The target gNodeB-DU #1 returns a UE context modification response (UE context modification response) message to the gNodeB-CU #1.

In S920, the gNodeB-CU #1 sends information #B2, and the target gNodeB-DU #1 receives the information #B2.

For content of the information #B2, refer to the step S820. Details are not described herein again.

The target gNodeB-DU #1 obtains the information #B2, to learn of statuses and information of all current unfinished HARQ processes, so that the target cell #1 has a capability of taking over the current HARQ processes.

S930: The UE #1 establishes a connection with the target cell #1.

Specifically, there may be the following steps.

Step a: The gNodeB-CU #1 sends an RRC reconfiguration message to the UE #1, where the message carries a target frequency of the target cell #1, a PCI of the target cell #1, and a C-RNTI and a dedicated random access preamble that are configured for the UE #1.

Step b: The UE #1 initiates contention-free random access in the target cell #1 in which the target gNodeB-DU #1 is located, and sends a message 1 (message 1, MSG1), where the message 1 includes a random access preamble sequence.

Step c: The target gNodeB-DU #1 makes a random access response, and sends a message 2 (message 2, MSG2).

Step d: The UE #1 sends RRC reconfiguration complete (RRC reconfiguration complete) information to the gNodeB-CU #1, and the UE #1 accesses the target cell #1.

Currently, in a time period (which may be referred to as a time period #A3) from an end moment of step a in S930 (that is, a moment at which the UE #1 successfully decodes the RRC reconfiguration message sent by the gNodeB-CU #1) to an end moment of step d in S930 (that is, a moment at which the gNodeB-CU #1 successfully decodes the RRC reconfiguration complete information), the UE #1 no longer sends uplink data to the source gNodeB-DU #1. This means that the UE #1 interrupts transmission of uplink retransmitted data of an unfinished uplink HARQ process, or interrupts transmission of feedback data (ACK or NACK) of an unfinished downlink HARQ process, or interrupts transmission of data of a new uplink HARQ process.

For this problem, the following solution is designed in this application.

In the time period #A3, the UE #1 may continue to send uplink data #A to the source gNodeB-DU #1, where the uplink data #A includes uplink retransmitted data of an unfinished uplink HARQ process, and/or feedback data (ACK or NACK) of an unfinished downlink HARQ process.

In a possible implementation, the uplink data #A may further include uplink data of a new HARQ process.

In the foregoing solution, because data of a HARQ process between the UE #1 and the source gNodeB-DU #1 is updated, updated data of the HARQ process needs to be transferred between the source gNodeB-DU #1 and the target gNodeB-DU #1. Therefore, the following solution is designed in this application.

After the gNodeB-CU #1 sends the RRC reconfiguration message to the UE #1 in step a in S930, the source gNodeB-DU #1 sends information #B2g to the target gNodeB-DU #1 after the duration #A3, and starts to periodically send information #B2g1, information #B2g2, and the like to the target gNodeB-DU #1, until the source gNodeB-DU #1 receives UE context release command (UE context release command) information sent by the gNodeB-CU #1. The information #B2g, the information #B2g1, the information #B2g2, and the like are updated information #B2 based on the uplink data #A sent by the UE #1 in the time period #A3. The information #B2g, the information #B2g1, the information #B2g2, and the like may include data corresponding to an updated HARQ process, and may include data corresponding to a non-updated HARQ process.

It should be noted that the source gNodeB-DU #1 sends the information to the target gNodeB-DU #1 through the gNodeB-CU #1. To be specific, the source gNodeB-DU #1 first sends the information to the gNodeB-CU #1, and then the gNodeB-CU #1 forwards the information to the target gNodeB-DU #1.

In a possible implementation, the duration #A3 may be predefined.

In a possible implementation, a value of the duration #A3 may be (2×RTT6-RTT7), where the RTT6 is a round-trip latency of signal transmission between the UE #1 and the source gNodeB-DU #1 or the target gNodeB-DU #1, and the RTT7 is a sum of a latency of signal transmission between the source gNodeB-DU #1 and the gNodeB-CU and a latency of signal transmission between the gNodeB-CU and the target gNodeB-DU #1.

It should be noted that the value of the duration #A3 may alternatively be greater than (2×RTT6-RTT7), for example, when a decoding error occurs on the UE #1 or the target gNodeB-DU #1 in the time period #A3.

For example, a value of the RTT6 is 540 ms.

In a possible implementation, a length of the foregoing cycle may be predefined.

In a possible implementation, the length of the foregoing cycle may be n times (0.5×RTT6), where n is an integer greater than 0.

When the UE #1 and the target gNodeB-DU #1 repeatedly send interaction signaling in the time period #A, and the target gNodeB-DU #1 times out in receiving the RRC reconfiguration complete information, the foregoing solution resolves a problem that the source gNodeB-DU #1 cannot send, to the target gNodeB-DU #1 in a timely manner, a status of an updated HARQ process between the source gNodeB-DU #1 and the UE #1.

Currently, in a time period (which may be referred to as a time period #B3) from a start moment (that is, a moment after the gNodeB-CU #1 sends the RRC reconfiguration message) of step a in S930 to an end moment (that is, a moment at which the gNodeB-CU #1 successfully decodes the RRC reconfiguration completion information) of step d in S930, the source gNodeB-DU #1 no longer sends downlink data to the UE #1. This means that the source gNodeB-DU #1 interrupts transmission of downlink retransmitted data of an unfinished downlink HARQ process, or interrupts transmission of feedback data (ACK or NACK) of an unfinished uplink HARQ process, or interrupts transmission of data of a new downlink HARQ process.

For this problem, the following solution is designed in this application.

In the time period #B3, the source gNodeB-DU #1 may continue to send downlink data #A to the UE #1, where the downlink data #A includes downlink retransmitted data of an unfinished downlink HARQ process, and/or feedback data (ACK or NACK) of an unfinished uplink HARQ process.

In a possible implementation, the downlink data #A may further include downlink data of a new HARQ process, for example, downlink user plane data that has been allocated by a UPF #1 to the source gNodeB-DU #1.

In the foregoing solution, because data of a HARQ process between the UE #1 and the source gNodeB-DU #1 is updated, updated data of the HARQ process needs to be transferred between the source gNodeB-DU #1 and the target gNodeB-DU #1. Therefore, the following solution is designed in this application.

After the gNodeB-CU #1 sends the RRC reconfiguration message in step a in S930, the source gNodeB-DU #1 sends information #B2g to the target gNodeB-DU #1 after the duration #A3, and starts to periodically send information #B2g1, information #B2g2, and the like to the target gNodeB-DU #1, until the source gNodeB-DU #1 receives UE context release command (UE context release command) information sent by the gNodeB-CU #1. The information #B2g, the information #B2g1, the information #B2g2, and the like are updated information #B2 based on the uplink data #A sent by the UE #1 in the time period #A3. The information #B2g, the information #B2g1, the information #B2g2, and the like may include data corresponding to an updated HARQ process, and may include data corresponding to a non-updated HARQ process.

It should be noted that the source gNodeB-DU #1 sends the information to the target gNodeB-DU #1 through the gNodeB-CU #1. To be specific, the source gNodeB-DU #1 first sends the information to the gNodeB-CU #1, and then the gNodeB-CU #1 forwards the information to the target gNodeB-DU #1.

For the duration #A3, refer to the foregoing description. Details are not described herein again.

For a length of the cycle, refer to the foregoing description. Details are not described herein again.

When the UE #1 and the target gNodeB-DU #1 repeatedly send interaction signaling in the time period #A, and the target gNodeB-DU #1 times out in receiving the RRC reconfiguration complete information, the foregoing solution resolves a problem that the source gNodeB-DU #1 cannot send, to the target gNodeB-DU #1 in a timely manner, a status of an updated HARQ process between the source gNodeB-DU #1 and the UE #1.

S940: The target gNodeB-DU #1 sends information #C5, and the UE #1 receives the information #C5.

The information #C5 includes at least one of the following information:
information #C51, indicating whether all current unfinished uplink HARQ processes between the UE #1 and the source gNodeB-DU #1 need to be retransmitted, where for example, the information #C51 may include an ID of an uplink HARQ process that needs to be retransmitted and NACK data, or an ID of an uplink HARQ process that does not need to be retransmitted and ACK data, and it should be understood that the uplink HARQ process that needs to be retransmitted or the uplink HARQ process that does not need to be retransmitted herein is included in all the unfinished uplink HARQ processes;
information #C51a, indicating a time-frequency resource occupied by uplink data corresponding to an uplink HARQ process that needs to be retransmitted by the UE #1 and an identifier of the target gNodeB-DU #1, where for example, the information #C51a may include an ID of the uplink HARQ process that needs to be retransmitted, the corresponding time-frequency resource, and the identifier of the target gNodeB-DU #1;
information #C52, indicating a resource that is of the target cell #1 and that is allocated by the target gNodeB-DU #1 to the UE #1, where the resource may be used to transmit new uplink data or downlink data or transmit HARQ data of a new HARQ process between the target cell #1 and the UE #1; and
information #C53, indicating at least one of feedback data for all current unfinished downlink HARQ processes that is sent by the UE #1 to the target cell #1, and a time-frequency resource occupied by the feedback data, where for example, the information #C53 may include at least one of the following information:
   an ID of a current unfinished downlink HARQ process, a time-frequency resource occupied by feedback data corresponding to the ID of the current unfinished downlink HARQ process, and the identifier of the target gNodeB-DU #1.

In a possible implementation, the information #C53 may alternatively be redundancy version data of the target cell #1 for downlink data for which the UE #1 feeds back NACK data (that is, retransmitted downlink data), and an ID of a corresponding downlink HARQ process.

After the UE #1 receives the information #C5, the HARQ process related to the ID of the corresponding HARQ process responds to a HARQ operation preferentially according to an indication of the information #C5 delivered by the target gNodeB-DU #1. For example, the UE #1 may send an ACK 1 to the source cell #1 on a time-frequency resource #1, or may send an ACK 1 to the target cell #1 on a time-frequency resource #2 according to an indication of the information #C53. In this case, the UE #1 preferentially selects the latter solution to send the ACK 1, that is, sends the ACK 1 to the target cell #1 on the time-frequency resource #2.

In a possible implementation, the information #C5 may be included in DCI and carried in RRC signaling.

In a possible implementation, in a process in which the UE #1 establishes a connection with the target cell #1, if the source cell #1 sends new downlink data to the UE #1 or receives new feedback data from the UE #1, the source gNodeB-DU #1 needs to send the generated new status to the target gNodeB-DU #1. For example, the source gNodeB-DU #1 needs to send data of all HARQ processes corresponding to the new downlink data and IDs of the corresponding HARQ processes to the target gNodeB-DU #1. For another example, the source gNodeB-DU #1 needs to send received new feedback data of the UE #1 and an ID of a corresponding HARQ process to the target gNodeB-DU #1, so that the target cell #1 learns of latest data of an unfinished HARQ process. After learning of the new HARQ process data, the target gNodeB-DU #1 may include control information corresponding to the new HARQ process data in the information #C5, and send the information #C5 to the UE #1. For specific content, refer to the information #C5. Details are not described herein again.

S950: The UE #1 sends response information #D2, and the target gNodeB-DU #1 receives the response information #D2.

Specifically, the UE #1 sends the response information #D2 based on the information #C5.

For example, the response information #D2 includes ACK or NACK data.

If the information #C5 includes the information #C51a, the UE #1 needs to send, on a time-frequency resource indicated by the information #C51a, uplink data that needs to be retransmitted.

If the information #C5 includes the information #C53, the UE #1 needs to send, on a time-frequency resource indicated by the information #C53, feedback data for current downlink data sent by the source gNodeB-DU #1 to the UE #1.

S960: The gNodeB-CU #1 sends information #G, and the source gNodeB-DU #1 receives the information #G.

Specifically, the information #G includes UE context release command (UE context release command) information. After receiving the information #G, the source gNodeB-DU #1 releases a connection to the UE #1.

In a possible implementation, before the source cell #1 releases the connection to the UE #1, if a new uplink HARQ process is generated, processing may be performed in the following two manners.

### Manner 1

The source cell #1 continues the new uplink HARQ process, and performs uplink data feedback for the UE #1, until the new uplink HARQ process ends.

### Manner 2

The source gNodeB-DU #1 sends, to the target gNodeB-DU #1, related data of a HARQ process for which a NACK needs to be returned. For specific content, refer to the foregoing information #B2. Details are not described herein again. For a HARQ process for which an ACK needs to be returned, the source cell #1 sends ACK data to the UE #1. After receiving the data, the target gNodeB-DU #1 may send, to the UE #1, information indicating whether the data needs to be retransmitted and a time-frequency resource of the target cell #1 that is occupied if the data needs to be retransmitted. For specific content, refer to the information #C5.

In a possible implementation, if the source cell #1 has downlink data that is not completely sent, the source cell #1 may continue to send the downlink data. After the downlink data is completely sent, a new HARQ process is formed, but new downlink data is no longer sent. In this case, the source gNodeB-DU #1 needs to send related data of the new HARQ process to the target gNodeB-DU #1. For specific content of the related data of the new HARQ process, refer to the information #B2. In this case, if the source gNodeB-DU #1 receives data sent by a UPF or there is downlink data that has not been sent in a buffer of the source gNodeB-DU #1#1, the source gNodeB-DU #1 needs to send, to the target gNodeB-DU #1, the downlink data that has not been sent, so that the target cell #1 can continue to send the downlink data that has not been sent.

According to the method 900, if cells before and after UE handover belong to different satellites, the different satellites are different gNodeB-DUs, the different gNodeB-DUs are controlled by a same gNodeB-CU, and the different gNodeB-DUs and the gNodeB-CU belong to a same base station, when the UE needs to perform inter-cell handover, a HARQ process performed by the UE can be continuous. This enhances a latency advantage of satellite communication, and achieves a soft combination coding gain.

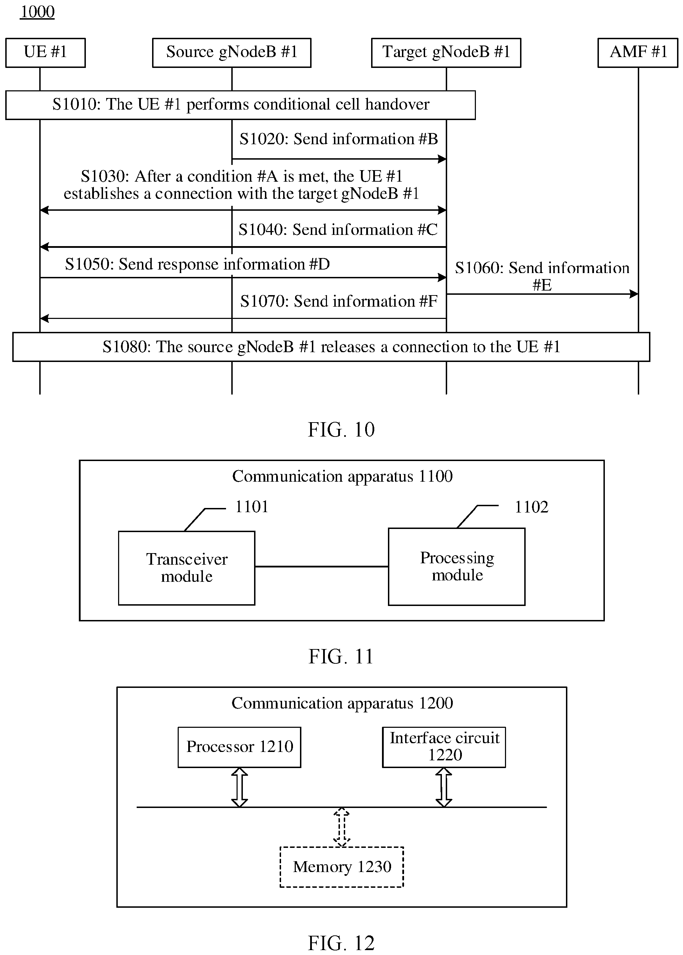

In embodiments of this application, how to make a HARQ process continuous when cell handover performed by UE is conditional cell handover (conditional handover) is further considered, for example, as shown in a method 1000 in FIG. 10. FIG. 10 is a schematic flowchart of another example according to an embodiment of this application. For UE #1, a source gNodeB #1, a target gNodeB #1, and an AMF, refer to the descriptions in FIG. 6. Details are not described herein again. The following uses the scenario corresponding to the method 200 as an example for description.

In S1010, the UE #1 performs conditional cell handover.

Specifically, there may be the following steps.

Step a: The source gNodeB #1 delivers measurement control information #A to the UE #1 by using an RRC reconfiguration (RRC reconfiguration) message. The measurement control information #A includes a measurement object (for example, intra-frequency measurement or inter-frequency measurement), a measurement configuration (for example, an object to be measured by the UE, a cell list, a report manner, a measurement identifier, or an event parameter), a measurement gap (GAP) configuration, and the like.

Step b: The UE #1 responds to the source gNodeB #1 by using an RRC reconfiguration complete (reconfiguration complete) message.

Step c: The source gNodeB #1 sends, through an Xn link, conditional handover request (conditional handover request) information to the target gNodeB #1 to which the selected target cell #1 belongs, to initiate a conditional handover request.

The conditional handover request information indicates that the cell handover performed by the UE #1 is conditional cell handover.

Step d: After receiving the conditional handover request information, the target gNodeB #1 performs admission control, and allocates an instance and a transmission resource to the UE #1 after admission is allowed.

Step e: The source gNodeB #1 sends an RRC reconfiguration message to the UE #1, to require the UE #1 to perform handover to the target cell #1, where the RRC reconfiguration message may include information such as an RRC reconfiguration target cell ID (RRCReconfiguration target cell ID), a new cell radio network temporary identifier (new cell radio network temporary identifier, new C-RNTI), a security algorithm (security algorithm), and a condition #A. The condition #A indicates that the UE #1 establishes a connection with the target gNodeB #1 when the condition #Ais met. The condition #A includes at least one of the following information:
a handover event: which is an event that triggers the UE #1 to perform cell handover, for example, an event defined in the 3GPP standard file 38.331 of 5G NR, for example,
an event A1 (Event A1): signal quality of a current serving cell starts to be better than a threshold (threshold);
an event A2 (Event A2): signal quality of a current serving cell starts to be worse than a threshold;
an event A3 (Event A3): signal quality of a neighboring cell starts to be better than that of a special serving cell by a specific different;
an event A4 (Event A4): signal quality of a neighboring cell starts to be better than a threshold;
an event A5 (Event A5): signal quality of a special serving cell starts to be worse than a threshold 1 (threshold 1) and better than a threshold 2 (threshold 2);
an event A6 (Event A6): signal quality of a neighboring cell starts to be better than that of a secondary cell by a specific different;
an event B1 (Event B1): a neighboring cell using a different radio access technology (radio access technology, RAT) starts to be better than a threshold; or
an event B2 (Event B2): signal quality of a primary cell starts to be worse than a threshold 1, and a neighboring cell using a different radio access technology starts to be better than a threshold 2;
a geographical location: which is a geographical location of the UE #1 or a geographical location of the source gNodeB #1;
a beam angle: which is an angle of a beam between the source gNodeB #1 and the UE #1;
time (time): which is time at which the UE #1 is triggered to perform cell handover, and may be a time offset, where for example, after a specific time offset, the UE #1 is triggered to perform cell handover, and the time offset may be a quantity of frames;
timing (Timing): which is absolute timing, for example, coordinated universal time (coordinated universal time, UTC); and
a timer: which triggers the UE #1 to perform cell handover after specific time.

Step f: The UE #1 monitors, for a candidate target cell, whether the condition #A in the foregoing conditional cell handover is met.

S1020: The source gNodeB #1 sends information #B, and the target gNodeB #1 receives the information #B.

The information #B indicates an unfinished uplink HARQ process between the source gNodeB #1 and the UE #1. For specific content of the information #B, refer to the step S220. Details are not described herein again.

The source gNodeB #1 sends the information #B, so that the target gNodeB #1 learns of statuses and information of all the current unfinished uplink HARQ processes, and has a capability of taking over the current HARQ processes.

S1030: After the condition #Ais met, the UE #1 establishes a connection with the target gNodeB #1.

Specifically, the following steps are included.

Step a: The UE #1 initiates contention-free random access in the target cell in which the target gNodeB #1 is located, and sends a message 1 (message 1, MSG1), where the message 1 includes a random access preamble (preamble) sequence.

Step b: The target gNodeB #1 makes a random access response, and sends a message 2 (message 2, MSG2).

Step c: The UE #1 sends RRC reconfiguration complete information to the target gNodeB #1, and the UE #1 is handed over to the target cell #1 over an air interface.

Currently, in a time period (which may be referred to as a time period #A4) from a moment at which the condition #A is met, that is, a moment at which the UE #1 starts to perform cell handover (which may also be referred to as a start moment of step a in S1030) to an end moment of step c in S1030 (that is, a moment at which the target gNodeB #1 successfully decodes the RRC reconfiguration complete information), the UE #1 no longer sends uplink data to the source gNodeB #1. This means that the UE #1 interrupts transmission of uplink retransmitted data of an unfinished uplink HARQ process, or interrupts transmission of feedback data (ACK or NACK) of an unfinished downlink HARQ process, or interrupts transmission of data of a new uplink HARQ process.

For this problem, the following solution is designed in this application.

In the time period #A4, the UE #1 may continue to send uplink data #A to the source gNodeB #1, where the uplink data #A includes uplink retransmitted data of an unfinished uplink HARQ process, and/or feedback data (ACK or NACK) of an unfinished downlink HARQ process.

In a possible implementation, the uplink data #A may further include uplink data of a new HARQ process.

In the foregoing solution, because data of a HARQ process between the UE #1 and the source gNodeB #1 is updated, updated data of the HARQ process needs to be transferred between the source gNodeB #1 and the target gNodeB #1. For a data update solution, refer to the step S230. Details are not described herein again.

S1040: The target gNodeB #1 sends information #C, and the UE #1 receives the information #C.

For content of the information #C, refer to the step S240. Details are not described herein again.

S1050: The UE #1 sends response information #D, and the target gNodeB #1 receives the response information #D.

For content of the response information #D, refer to the step S250. Details are not described herein again.

S1060: The target gNodeB #1 sends information #E, and the AMF #1 receives the information #E.

For content of the information #E, refer to the step S260. Details are not described herein again.

S1070: The target gNodeB #1 sends information #F, and the UE #1 receives the information #F.

For content of the information #F, refer to the step S270. Details are not described herein again.

S1080: The source gNodeB #1 releases a connection to the UE #1.

Specifically, there may be the following steps.

Step a: The AMF #1 returns a path switch request acknowledgement (path switch request acknowledge) message to the target gNodeB #1. If the AMF #1 indicates, in the path switch request acknowledgement message, a PDU session that fails to be established by the core network, the target gNodeB #1 deletes the PDU session that fails to be established.

Step b: The target gNodeB #1 sends a UE context release (UE context release) message to the source gNodeB #1. After receiving the message, the source gNodeB #1 releases the connection to the UE #1.

In a possible implementation, after the source gNodeB #1 sends the information #B and before the source gNodeB #1 releases the connection to the UE #1, if a new uplink HARQ process is generated or a status of a HARQ process is updated, for a processing manner of the source gNodeB #1, refer to the step S280. Details are not described herein again.

It should be noted that the foregoing method for enabling continuity of a HARQ process when the UE #1 performs conditional cell handover is also applicable to the scenarios in the method 500, the method 800, and the method 900. Details are not described herein again.

It should be noted that some signaling (message) names in the foregoing embodiments of this application are signaling (message) names in the 3GPP standard, and are merely used as examples. Meanings (functions) of the signaling (message) names may be the same as or different from meanings (functions) specified in 3GPP.

It should be noted that embodiments that can resolve the technical problem of this application can also be obtained by combining or splitting the foregoing embodiments, and all the embodiments fall within the protection scope of this application.

FIG. 11 and FIG. 12 each are a schematic diagram of a structure of a possible communication apparatus according to an embodiment of this application. The communication apparatus may implement a function of the terminal device or the network device in the foregoing method embodiments. Therefore, beneficial effects of the foregoing method embodiments can also be achieved. In embodiments of this application, the communication apparatus may be the communication apparatus in the method 100, or may be a module (for example, a chip) used in the communication apparatus.

As shown in FIG. 11, a communication apparatus 1100 includes a transceiver module 1101 and a processing module 1102. The communication apparatus 1100 may be configured to implement a function of the communication apparatus in the method embodiment shown in FIG. 5.

When the communication apparatus 1100 is configured to implement the function of the communication apparatus in the method embodiment in FIG. 5, the transceiver module 1101 is configured to transmit first data between a first terminal device and a first network device, where the first data corresponds to a first hybrid automatic repeat request HARQ process; the transceiver module 1101 is further configured to transmit second data between the first terminal device and a second network device when the first terminal device is handed over from the first network device to the second network device, where the second data corresponds to the first HARQ process, and the second data includes at least one of data for retransmitting the first data and feedback information for the first data; and the processing module 1102 is configured to determine the first data and the second data.

For more detailed descriptions of the transceiver module 1101 and the processing module 1102, refer to related descriptions in the foregoing method embodiments. Details are not described herein again.

As shown in FIG. 12, a communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to: store instructions executed by the processor 1210, or store input data required by the processor 1210 to run the instructions, or store data generated after the processor 1210 runs the instructions.

For example, the memory 1230 and the processor 1210 may be integrated together, or may be independent components.

When the communication apparatus 1200 is configured to implement the method in the foregoing method embodiments, the processor 1210 may be configured to perform a function of the processing module 1102, and the interface circuit 1220 may be configured to perform a function of the transceiver module 1101.

When the communication apparatus is a chip used in the communication apparatus, the chip in the communication apparatus implements a function of the communication apparatus in the foregoing method embodiments. The chip in the communication apparatus receives information from another module (for example, a radio frequency module or an antenna) in the communication apparatus; or the chip in the communication apparatus sends information to another module (for example, a radio frequency module or an antenna) in the communication apparatus.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

It should be noted that embodiments in this specification are all described in a progressive manner, for same or similar parts in embodiments, mutual reference may be made to these embodiments, and each embodiment focuses on a difference from other embodiments. In particular, for the system or system embodiment, because the system or system embodiment is basically similar to the method embodiment, descriptions are relatively simple. For related parts, refer to the descriptions in the method embodiment. The described system or system embodiment is merely an example. The units described as separate parts may or may not be physically separate, and parts displayed as units may or may not be physical units, may be located in one place, or may be distributed on a plurality of network units. Some or all of the modules may be selected according to an actual requirement to achieve the objectives of the solutions in the embodiments. A person of ordinary skill in the art may understand and implement the solutions without creative efforts.

It should be further noted that, in this specification, relational terms such as first, second, "#1", and "#2" are merely used to distinguish one entity or operation from another entity or operation, and do not necessarily require or imply that any actual relationship or sequence exists between these entities or operations. Moreover, the term "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. In a case without more restrictions, for an element limited by the statement "include a...", a process, method, article, or device that includes the element may further include another same element.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. An example storage medium is coupled to a processor, so that the processor can read information from the storage medium and can write information into the storage medium. Certainly, the storage medium may alternatively be a part of the processor. The processor and the storage medium may be located in an ASIC. In addition, the ASIC may be located in an access network device or a terminal device. Certainly, the processor and the storage medium may exist in the access network device or the terminal device as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk drive, or a magnetic tape; or may be an optical medium, for example, a DVD; or may be a semiconductor medium, for example, a solid state disk (solid state disk, SSD).

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes. It should be noted that not all steps in embodiments of this application need to be performed. Some steps may be omitted, and similar effects can still be achieved.

## Claims

1. A data transmission method, wherein the method comprises:
transmitting, by a first terminal device, first data with a first network device, wherein the first data corresponds to a first hybrid automatic repeat request HARQ process; and
transmitting, by the first terminal device, second data with a second network device when the first terminal device is handed over from the first network device to the second network device, wherein the second data corresponds to the first HARQ process, and the second data comprises at least one of data for retransmitting the first data and feedback information for the first data.

2. The method according to claim 1, wherein the transmitting, by the first terminal device, second data with a second network device when the first terminal device is handed over from the first network device to the second network device comprises:
transmitting, by the first terminal device, the second data with the first network device in a first time period in which the first terminal device is handed over from the first network device to the second network device, wherein the first time period comprises a time period between a moment at which the first terminal device successfully decodes a first radio resource control RRC reconfiguration message for performing the handover and a moment at which the second network device successfully decodes a first RRC reconfiguration complete message.

3. The method according to claim 1, wherein the transmitting, by the first terminal device, second data with the first network device when the first terminal device is handed over from the first network device to the second network device comprises:
transmitting, by the first terminal device, the second data with the first network device in a first time period in which the first terminal device is handed over from the first network device to the second network device, wherein the first time period comprises a time period between a moment at which the first terminal device successfully sends a message 1 MSG1 and a moment at which the second network device successfully decodes a first RRC reconfiguration complete message.

4. The method according to any one of claims 1 to 3, wherein before the transmitting, by the first terminal device, second data with a second network device, the method comprises:
replicating, by the first terminal device, data of the first HARQ process in a first media access control MAC entity to a second MAC entity, wherein the first MAC entity corresponds to the first network device, and the second MAC entity corresponds to the second network device.

5. The method according to any one of claims 1 to 4, wherein before the transmitting, by the first terminal device, second data with a second network device, the method comprises:
receiving, by the first terminal device, first indication information, wherein the first indication information indicates the first terminal device to transmit the second data with the second network device.

6. The method according to claim 5, wherein the first indication information comprises one or more of the following information:
an identifier of the first HARQ process, an identifier of the second network device, and a first resource, wherein the first resource is a resource occupied by the second data.

7. The method according to any one of claims 1 to 6, wherein the first data is uplink data, and the second data comprises the data for retransmitting the first data.

8. The method according to any one of claims 1 to 7, wherein the first data is downlink data, and the second data comprises the feedback information for the first data.

9. The method according to any one of claims 1 to 8, wherein the feedback information for the first data comprises an acknowledgement ACK or a negative acknowledgement NACK.

10. The method according to any one of claims 1 to 9, wherein the first network device or the second network device is a satellite.

11. A data transmission method, wherein the method comprises:
receiving, by a first network device, first information, wherein the first information indicates that a first terminal device is handed over from a second network device to the first network device;
obtaining, by the first network device, second information, wherein the second information indicates an unfinished first hybrid automatic repeat request HARQ process between the first terminal device and the second network device; and
sending, by the first network device, third information to the first terminal device based on the second information, wherein the third information indicates the first terminal device to transmit second data with the first network device, the second data corresponds to the first HARQ process, the second data comprises at least one of data for retransmitting first data and feedback information for the first data, the first data corresponds to the first HARQ process, and the first data is data that has been transmitted between the first terminal device and the second network device.

12. The method according to claim 11, wherein the method comprises:
receiving, by the first network device in a first time period, fourth information sent by the second network device, wherein the first time period comprises a time period between a moment at which the second network device sends a first radio resource control RRC reconfiguration message for the first terminal device to perform the handover and an end moment at which the first network device successfully decodes a first RRC reconfiguration complete message sent by the first terminal device, the first time period is used by the second network device to transmit third data with the first terminal device, the third data comprises at least one of the data for retransmitting the first data, the feedback information for the first data, and initial data of a second HARQ process, and the fourth information is updated information of the second information and corresponds to the third data.

13. The method according to claim 12, wherein the receiving, by the first network device in a first time period, fourth information sent by the second network device comprises:
receiving, by the first network device after a first latency from a start moment of the first time period, the fourth information sent by the second network device.

14. The method according to claim 13, wherein a value of the first latency is 2×RTT, and the RTT is a round-trip latency of data transmission between the first terminal device and the first network device or the second network device.

15. The method according to claim 13 or 14, wherein the method comprises:
receiving, by the first network device after a second latency from an end moment of receiving the fourth information, fifth information sent by the second network device, wherein the fifth information is updated information of the fourth information, a value of the second latency is n times (0.5×RTT), and n is a positive integer.

16. The method according to any one of claims 11 to 15, wherein the second information comprises at least one of the following information:
redundancy version data of the first HARQ process, an identifier of the first HARQ process, and a redundancy version number of the first HARQ process.

17. The method according to any one of claims 11 to 16, wherein the second information comprises at least one of the following information:
data that is of the first HARQ process and that has been received by the second network device, and data that has been decoded by the second network device for the first HARQ process.

18. The method according to any one of claims 11 to 17, wherein the third information comprises one or more of the following information:
the identifier of the first HARQ process, an identifier of the first network device, and a first resource, wherein the first resource is a resource occupied for transmitting the second data.

19. The method according to any one of claims 11 to 18, wherein when the first data is uplink data, the second data comprises the data for retransmitting the first data.

20. The method according to any one of claims 11 to 19, wherein when the first data is downlink data, the second data comprises the feedback information for the first data.

21. The method according to any one of claims 11 to 20, wherein the feedback information for the first data comprises an acknowledgement ACK or a negative acknowledgement NACK.

22. The method according to any one of claims 11 to 21, wherein the first terminal device or the second network device is a satellite.

23. A data transmission method, wherein the method comprises:
transmitting, by a first network device, first data with a first terminal device, wherein the first data corresponds to a first hybrid automatic repeat request HARQ process; and
sending, by the first network device, first information to a second network device when the first terminal device is handed over from the first network device to the second network device, wherein the first information indicates the first HARQ process.

24. The method according to claim 23, wherein the first information comprises at least one of the following information:
redundancy version data of the first HARQ process, an identifier of the first HARQ process, and a redundancy version number of the first HARQ process.

25. The method according to claim 23 or 24, wherein the first information comprises at least one of the following information:
data that is of the first HARQ process and that has been received by the first network device, and data that has been decoded by the first network device for the first HARQ process.

26. The method according to any one of claims 23 to 25, wherein the method comprises:
transmitting, by the first network device, second data with the first terminal device in a first time period, wherein the second data comprises at least one of data for retransmitting the first data, feedback information for the first data, and initial data of a second HARQ process, and the first time period comprises a time period between a moment at which the first network device sends a first radio resource control RRC reconfiguration message for the first terminal device to perform the handover and a moment at which the second network device successfully decodes a first RRC reconfiguration complete message sent by the first terminal device.

27. The method according to claim 26, wherein the method comprises:
sending, by the first network device, second information to the second network device after a first latency from a start moment of the first time period, wherein the second information is updated information of the first information.

28. The method according to claim 27, wherein the first network device is a first satellite, the second network device is a second satellite, there is an inter-satellite link between the first network device and the second network device, a value of the first latency is 2×RTT1-0.5×RTT2, the RTT1 is a round-trip latency of data transmission between the first terminal device and the first network device or the second network device, and the RTT2 is a round-trip latency of data transmission between the first network device and the second network device.

29. The method according to claim 27, wherein the first network device is a first satellite, the second network device is a second satellite, the first network device and the second network device perform data transmission through a third network device, a value of the first latency is 2×RTT3-RTT4, the RTT3 is a round-trip latency of data transmission between the first terminal device and the first network device or the second network device, the RTT4 is a sum of a second latency and a third latency, the second latency is a latency of data transmission between the first network device and the third network device, and the third latency is a latency of data transmission between the second network device and the third network device.

30. The method according to claim 27, wherein the first network device and the second network device are a first satellite, a value of the first latency is 2×RTT5, and the RTT5 is a round-trip latency of data transmission between the first terminal device and the first network device.

31. The method according to any one of claims 27 to 30, wherein the method comprises:
sending, by the first network device, third information to the second network device after the second latency from a moment at which the second information is sent, wherein the third information is updated information of the second information, a value of the second latency is n times (0.5×RTT6), the RTT6 is a round-trip latency of data transmission between the first terminal device and the first network device or the second network device, and n is a positive integer.

32. A data transmission apparatus, wherein the apparatus comprises:
a transceiver module, wherein the transceiver module is configured to transmit first data between a first terminal device and a first network device, and the first data corresponds to a first hybrid automatic repeat request HARQ process, wherein
the transceiver module is further configured to transmit second data between the first terminal device and a second network device when the first terminal device is handed over from the first network device to the second network device, wherein the second data corresponds to the first HARQ process, and the second data comprises at least one of data for retransmitting the first data and feedback information for the first data.

33. The apparatus according to claim 32, wherein that the transceiver module is further configured to transmit second data between the first terminal device and a second network device when the first terminal device is handed over from the first network device to the second network device comprises:
the transceiver module is further configured to transmit the second data between the first terminal device and the first network device in a first time period in which the first terminal device is handed over from the first network device to the second network device, wherein the first time period comprises a time period between a moment at which the first terminal device successfully decodes a first radio resource control RRC reconfiguration message for performing the handover and a moment at which the second network device successfully decodes a first RRC reconfiguration complete message.

34. The apparatus according to claim 32, wherein that the transceiver module is further configured to transmit second data between the first terminal device and the first network device when the first terminal device is handed over from the first network device to the second network device comprises:
the transceiver module is further configured to transmit the second data between the first terminal device and the first network device in a first time period in which the first terminal device is handed over from the first network device to the second network device, wherein the first time period comprises a time period between a moment at which the first terminal device successfully sends a message 1 MSG1 and a moment at which the second network device successfully decodes a first RRC reconfiguration complete message.

35. A data transmission apparatus, wherein the apparatus comprises:
a transceiver module, wherein the transceiver module is used by a first network device to receive first information, wherein the first information indicates that a first terminal device is handed over from a second network device to the first network device, wherein
the transceiver module is further used by the first network device to obtain second information, wherein the second information indicates an unfinished first hybrid automatic repeat request HARQ process between the first terminal device and the second network device; and
the transceiver module is further used by the first network device to send third information to the first terminal device based on the second information, wherein the third information indicates the first terminal device to transmit second data with the first network device, the second data corresponds to the first HARQ process, the second data comprises at least one of data for retransmitting first data and feedback information for the first data, the first data corresponds to the first HARQ process, and the first data is data that has been transmitted between the first terminal device and the second network device.

36. The apparatus according to claim 35, wherein the transceiver module is further used by the first network device to receive, in a first time period, fourth information sent by the second network device, wherein the first time period comprises a time period between a moment at which the second network device sends a first radio resource control RRC reconfiguration message for the first terminal device to perform the handover and an end moment at which the first network device successfully decodes a first RRC reconfiguration complete message sent by the first terminal device, the first time period is used by the second network device to transmit third data with the first terminal device, the third data comprises at least one of the data for retransmitting the first data, the feedback information for the first data, and initial data of a second HARQ process, and the fourth information is updated information of the second information and corresponds to the third data.

37. A data transmission apparatus, wherein the apparatus comprises:
a transceiver module, wherein the transceiver module is configured to transmit first data between a first network device and a first terminal device, and the first data corresponds to a first hybrid automatic repeat request HARQ process, wherein
the transceiver module is further used by the first network device to send first information to a second network device when the first terminal device is handed over from the first network device to the second network device, wherein the first information indicates the first HARQ process.

38. A communication apparatus for data transmission, comprising a processor and a communication interface, wherein the communication interface is configured to receive a signal from another communication apparatus other than the communication apparatus and transmit the signal to the processor, or transmit a signal from the processor to another communication apparatus other than the communication apparatus, and the processor is configured to implement the method according to any one of claims 1 to 10, 11 to 22, or 23 to 31.

39. A computer-readable storage medium, wherein the computer-readable storage medium stores a computer program, and when the computer program is run, the method according to any one of claims 1 to 10, 11 to 22, or 23 to 31 is implemented.

40. A computer program product, wherein the computer program product comprises computer program code, and when the computer program code is run by a communication apparatus, the communication apparatus is enabled to perform the method according to any one of claims 1 to 10, 11 to 22, or 23 to 31.
